# EUROPEAN PATENT APPLICATION

(11) **EP 4 715 580 A1**
(43) Date of publication of application: **25.03.2026**
(21) Application number: 25200397.5
(22) Date of filing: 05.09.2025
(51) Int. Cl.: G06F 8/71, G06F 8/60, G06F 8/61, G06F 9/455, G06F 9/54, G06F 11/3668, G06F 8/36, G06F 9/50, G06F 8/70

(54) **SYSTEMS AND METHODS FOR DEVELOPING NATIVE APPS FOR A CLOUD DATA PLATFORM**

(30) Priority: 18.09.2024 GB 202413765
(71) Applicant: DataOps Software Limited, London NW1 7HU (GB)
(72) Inventor: ADAMS, Guy, London, NW1 7HU (GB); HOPPER, Sam, London, NW1 7HU (GB); CRUMLEY, Luke, London, NW1 7HU (GB); MCCLELLAND, Alastair, London, NW1 7HU (GB)
(74) Representative: Carpmaels & Ransford LLP

(57) **Abstract**

This disclosure relates to methods, devices, and computer-readable media relating to developing, configuring, building, deploying, packaging and/or testing native applications for a cloud data platform, particularly Snowflake ("Snowflake native apps"). One such device is configured to receive an input and determine whether the input is a first input or a second input, wherein, for a given functional component of a cloud data platform native app, the computing device is configured to prepare, if the input is the first input, the functional component to be run in a first mode of execution, said first mode comprising remote cloud-based execution as part of a packaged cloud data platform native app; and the computing device is configured to prepare, if the input is the second input, the functional component to be run in a second mode of execution; wherein said second mode comprises either local execution on the computing device; or remote cloud-based execution as a standalone cloud data platform functional component. The cloud data platform may be Snowflake.

## Description

### Field of Invention

The present invention relates to methods, devices, and computer-readable media relating to developing, configuring, building, deploying, packaging and/or testing native applications for a cloud data platform, particularly Snowflake ("Snowflake native apps").

### Background

A cloud data platform is an environment hosted using cloud infrastructure that provides tools for storing, processing, and analysing data. Such platforms typically centralise data from various sources into a scalable infrastructure and usually includes services for data storage (e.g., object storage, databases), data integration (e.g., ETL tools), and analytics (e.g., query engines, machine learning). Consumers can access and manipulate large datasets using cloud resources, benefiting from the platform's elasticity, and distributed computing.

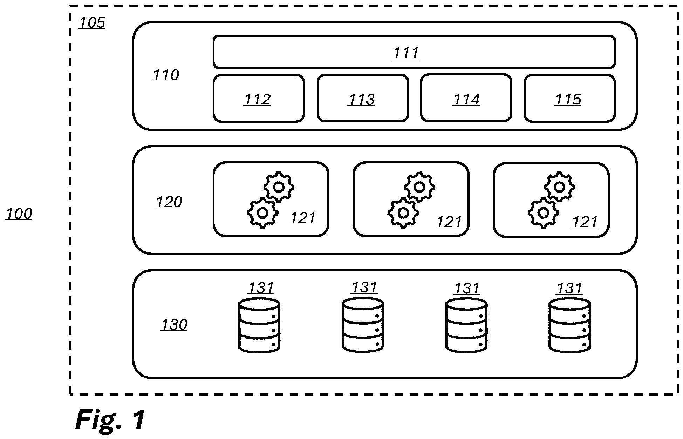

Snowflake is a particular example of a cloud data platform 100. Fig. 1 depicts basic features of the architecture of the Snowflake data platform. As can be seen in Fig. 1, Snowflake uses a virtual private cloud (VPC) 100 that includes a cloud services layer 105, a query processing layer 120, and a database storage layer 130. Cloud services layer 110 handles key operations such as authentication, infrastructure management, optimisation, and security. Cloud services layer 110 includes an authentication and access control service 111 for managing secure user access and data permissions, an infrastructure manager service 112 that orchestrates and manages cloud resources, and an optimiser service 113 responsible for query optimisation through cost-based execution plans. Additionally, cloud services layer 110 includes a metadata manager service 114 that tracks table schemas, query history, and performance statistics, and a security service 115 that ensures data encryption and compliance with security protocols across the platform. Query processing layer 120 comprises a plurality of virtual warehouses 121, which are independent clusters of compute resources. Each of the virtual warehouses 121 executes queries in parallel, scaling automatically based on workload demands. Query processing layer 120 ensures elasticity, as each of the virtual warehouses 121 can be resized or paused independently, allowing for workload isolation and optimisation for both read and write operations. Database storage layer 130 provides scalable storage for structured and semi-structured data (e.g., JSON, Parquet). Data is stored within the database storage layer 130 using a plurality of databases 131. The plurality of databases 131 are decoupled from the compute resources of the virtual warehouses 121 to allow the platform to scale each independently, optimising resource usage and performance while maintaining consistency through automatic data replication and failover mechanisms. The cloud data platform 100 is typically implemented on third-party cloud infrastructure (not shown) provided by a cloud service provider (CSP). Examples of compatible CSPs include Amazon Web Services (AWS), Microsoft Azure, and Google Cloud Platform.

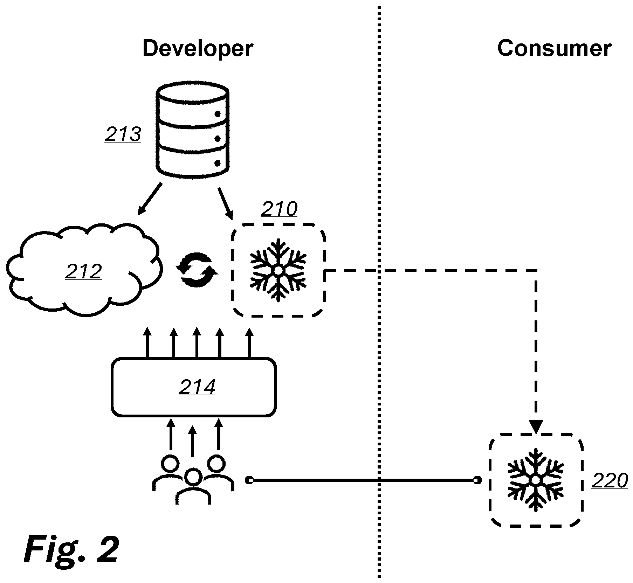

In the context of cloud data platforms, an application refers to any software or service that leverages the cloud data platform 100 for data storage, processing and/or analysis. Snowflake in particular offers three different application paradigms; managed apps, connected apps, and native apps, shown in Figs. 2, 3 and 4, respectively. These application paradigms differ in how the application is integrated with the cloud data platform 100 shown in Fig. 1. The integration impacts the way in which a developer of the application and/or a consumer of the application interact with the application.

Fig. 2 illustrates the managed apps paradigm for cloud data platform 100. In this paradigm, the application is managed by the developer. In particular, the developer runs the application within their own developer account 210 and/or CSP 212. The developer also manages data ingestion to the platform from one or more data sources 213. The application itself is hosted in an application tier 215 provided by the developer (e.g. on CSP 212), which is accessible to different users, including users pertaining to the developer and the consumer. The consumer primarily interacts with the application tier 215, rather than directly with the cloud data platform 100. However, data access can be provided to a consumer account 220 directly from the developer account 210 via existing data sharing capabilities within the cloud data platform 100, such as data extracts or APIs.

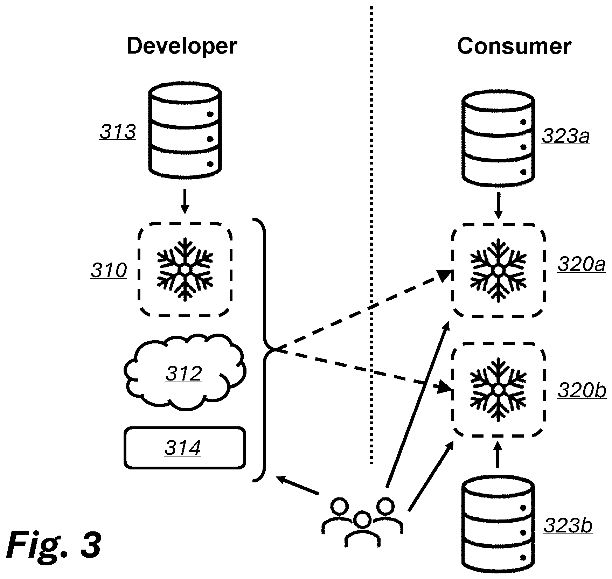

Fig. 3 illustrates the connected apps paradigm for cloud data platform 100. In this paradigm, the application may still be managed by the developer, using the developer account 310 and/or CSP 312. However, the consumer retains control over their data and also has direct access to the data in their consumer account 320a, 320b. To achieve this, the application is directly connected to the consumer account (Fig. 3 shows two consumer Snowflake accounts, 320a, 302b) through cloud data platform 100 clients and credentials, allowing for secure data transfer and processing. Data ingest is managed by the developer and/or the consumer. In one example, data ingest may be managed by the consumer to their account 320a from one or more data sources 323a. In another example, data ingest may be managed by through the consumer account 302b from data sources 323b, as well as through the developer account 310 from data sources 313. The application tier 314 is optional as the consumer can access the data through their account 320a, 320b.

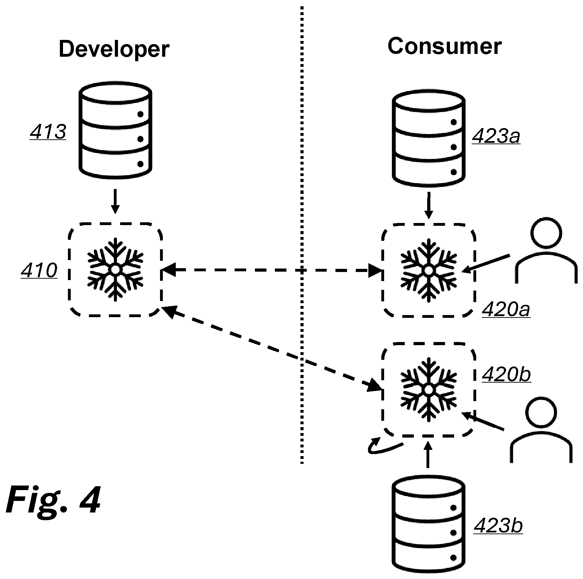

Fig. 4 depicts the native apps paradigm for cloud data platform 100. In this paradigm, the application runs natively in the cloud data platform 100. In other words, the application is fully integrated into the cloud data platform 100. There is no direct access between the consumer and the developer in this paradigm. Instead, the consumer installs the application to their account 420a, 420b, from a central repository provided by the cloud data platform 100, for example a marketplace. Consumers interact with the installed application through their own account 420a, 420b, where the application is run. The consumer's data does not leave the consumer's control. As with connected apps, data ingested for the purpose of native apps may be ingested by the developer account 410 from one or more sources 413 and/or by the consumer account and their respective sources. Fig. 4 shows a first consumer account 420a, with corresponding sources 423a, and a second consumer account 420b, with its own corresponding sources 423b. The application is published to the central repository by the developer. Application log data may be sent from the consumer account to the developer account 410 for development purposes.

Native apps are favoured by consumers because of the native integration within their own account environment, providing full control over data and application processing. In particular, since the application runs entirely within the consumer account 420a, 420b of the cloud data platform 100, data never leaves their environment, ensuring enhanced privacy and security. Additionally, the central repository provides a convenient single source of applications that are compatible with the consumer's Snowflake account.

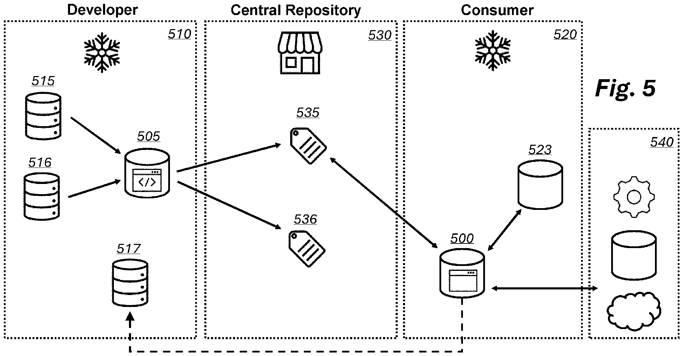

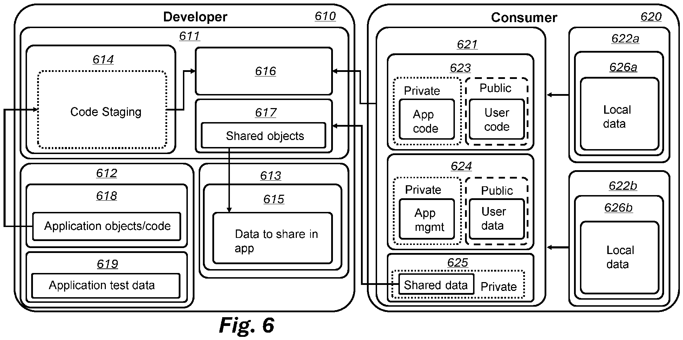

Further details about Snowflake native apps are described with reference to Fig. 5 and Fig. 6. Fig. 5 shows how with native apps developers distribute applications via the central repository 530, i.e. Snowflake Marketplace, to consumers, allowing integration with consumer data. The developer account 510 manages the creation and development of the application package 505. The application package 505 typically includes data relating to container services, Snowpark (with Python/Java), Streamlit, Cortex Al, and the like. The application package 505 is based on proprietary data 515, such as the developer's computer executable code, as well in information relating to licensing and entitlements 516. Any reference data may also be included in the application package 505. The application package 505 can be distributed either as a public listing 535 or a private listing 536 within the central repository 530. The developer chooses how to distribute the application package 505 from via developer account 510. The consumer may install the application 500 from the public listing 535 of the application package 505 (or otherwise receive the private listing 536 from the developer). The application 500 is installed within the consumer account 520 and can be used to interact with any data within the consumer account 520, as embodied by database 523 in Fig. 5 (such data may be ingested to the consumer account 520 by the consumer from other sources). The application 500 runs directly in the consumer account 520, typically leveraging dedicated compute resources, and may involve providing a UI to the consumer, for instance via Streamlit. In this way, the consumer's data remains secure and does not leave the consumer account 520, unless permitted to do so by the consumer. For some applications, as shown in Fig. 5, the application 500 may integrate with an external system 540, for example an external system of the developer. Application log data, including shared telemetry and/or trace events, may be sent from the consumer account 520 to the developer account 510. The developer may store the application log data at event storage 517 within the developer account 510, where it can be used for future development of the application 500. Native apps also support push upgrades, allowing developers to update applications 500 without direct access to consumer accounts 520.

Fig. 6 shows an example developer account 610 and consumer account 620 implementation for native apps. In the developer account 610, there is an application package database 611, development database 612, and/or reference database 613. Application package database 611 contains a code stage schema 614, used for staging application code, which is managed through version control and release management 616. The application package database 611 also contains a shared schema 617 with shared objects that reference data to share with the consumer from a reference schema 615 in the reference database 513. Development database 613 includes application objects and code within a development schema 618, as well as application test data in a test data schema 619. The consumer account 620 includes an application database 621, which uses the application code from version control and release management 616. The application database 621 comprises a versioned schema 623 for application code, a separate unversioned schema 624 for data, and a shared schema 625. The versioned schema 623 and unversioned schema 624 contain public and private parts for storing various data, as shown in Fig. 6. The developer can use the shared schema 625 of the application database 621 to access shared application data from the consumer. The consumer's own data resides in one or more databases 622a, 622b of the consumer account 620, each having its own data schema 626a, 626b. The one or more databases 622a, 622b are integrated into the application via references, enabling secure interaction without exposing raw data to the developer.

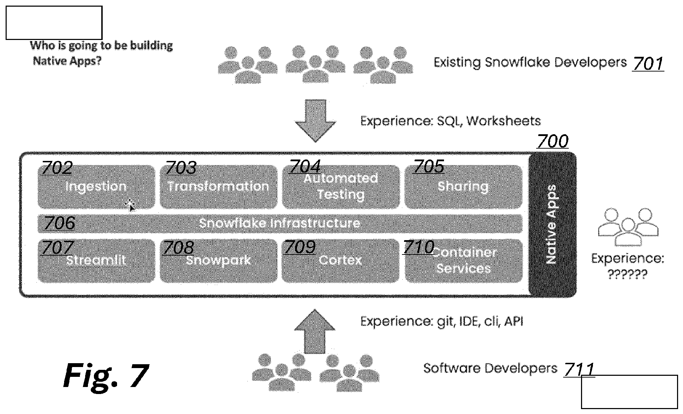

As may be appreciated from Fig. 5 and Fig. 6, implementing an application within a cloud data platform such as Snowflake as a native apps is complicated. This means that development of native apps is particularly challenging. Fig. 7 highlights the challenges of building native apps 700 in Snowflake, demonstrating the skills gap and complexity involved. Existing Snowflake developers 701, experienced in SQL and worksheets, are familiar with foundational Snowflake processes such as data ingestion 702, data transformation 703, automated testing 704, and data sharing 705, as well as Snowflake infrastructure 706. However, developing native apps requires a deeper understanding of advanced tools like Streamlit 707, Snowpark 708, Cortex 709, and container services 710, which require expertise typically possessed by software developers 711 experienced with tools like Git, IDEs, CLI, and APIs. The transition from simple data workflows to fully-fledged native app development introduces a steep learning curve, emphasising the need for expertise beyond traditional Snowflake operations. Native app development demands knowledge of both Snowflake-specific infrastructure and modern software development practices, making it a challenging process for most data professionals.

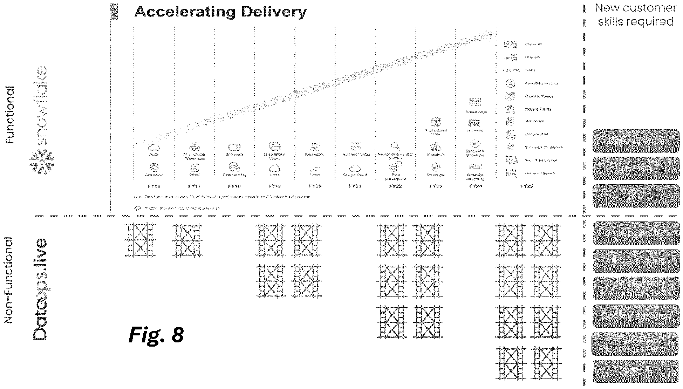

Fig. 8 illustrates the growing complexity of development in Snowflake over time, as seen through the progression of feature releases from FY16 to FY25. Early functional components of Snowflake such as Cloud DW and multi-cluster warehouses required foundational SQL and cloud skills, while more recent advancements like Cortex Al, Snowpark Containers, and Snowflake Copilot demand sophisticated expertise in data science. To help address the rising complexity in Snowflake's functional components, non-functional components are being developed, as depicted in Fig. 8 below the dotted line. However, significant challenges remain when it comes to native apps due to the complex implementation in Snowflake. Where Snowflake functional components are referred to herein, it may a reference to one or more of the functional components shown in Fig. 8.

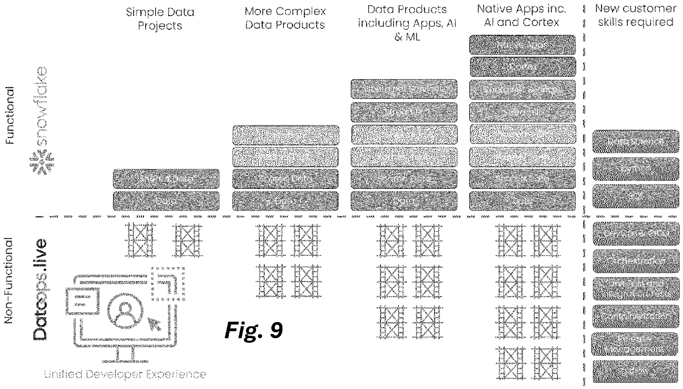

Further still, the complexity of the development process is highly impacted by the nature of the application itself. Fig. 9 illustrates how the complexity of the application and the data (referred to collectively in Fig. 9 as a "data project") influences the development process within the Snowflake environment. Simple data projects, represented on the left, primarily involve basic data and shared data layers, which are relatively straightforward to develop. As the complexity increases toward more advanced data products, additional tools like Snowpark, Partner Tech, and Machine Learning are required, adding to the development burden. For the most complex native apps, including Al and Cortex 906, a full stack of technologies such as Container Services, Streamlit, and Snowpark / ML becomes necessary. These projects not only require advanced functional components but also demand new skills like Data Science, Python, and DevOps, significantly raising the complexity of development.

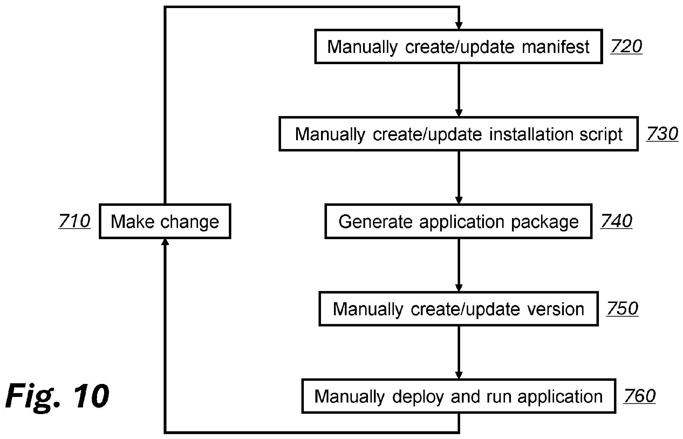

At present, development of native apps for cloud data platforms such as Snowflake is performed manually, usually by a group of developers with the requisite skills. Fig. 10 details some of the manual steps involved in the development process of a native app. As shown in Fig. 10, the first step 710 is to make a change. This may involve creating a new application code or updating existing application code. Then, in step 720, a manifest is manually created or updated. This typically involves creating a Manifest file or object (e.g. Manifest.yml). The manifest defines metadata about the app, configuration options, and provides references to different artifacts of the app. The next step, step 730, is to manually create or update the installation script for the app (e.g. setup.sql). This involves defining all Snowflake objects used within the application, and runs every time the application is installed into a new environment. Then, at step 740, an application package is generated. An application package is to that of an application installer for a desktop computer, like .msi for Windows or .pkg for Mac; it contains all material used to install the application later, including setup scripts. After this, the version number of the application package is created or updated at step 750. Then, at step 760, application package is manually deployed to Snowflake, usually to the developer account, where the application can be run. Only then can testing occur. This process repeats until testing is successful and the desired change has been made to the native app. Once a particular native app development version is complete, the native app can be made available for consumers as via a central repository as discussed with respect to Fig. 5. As also discussed, updated versions of the native app can also be pushed by Snowflake to existing consumers of the native app.

Known issues with the current approach to native app development include the lack of an efficient method for testing native apps. Rebuilding and redeploying the entire native app for every minor code change results in excessive delays, making the process impractical. Conversely, testing solely in a local environment provides insufficient insight into whether the native app will function as expected within Snowflake. Moreover, because development of various functional components of the app is often divided among different developers or even separate teams, each specialising in different skill sets, this adds complexity to the development process. Moreover, testing frequently requires manual execution, further increasing development time. Additionally, the testing process varies depending on the environment-local, standalone, or within a native app-each requiring different methods and strategies, further complicating the development workflow.

For all these reasons and more, it would be advantageous to provide systems and methods that improve upon the present state of the art, such that quicker and simpler development of native apps for cloud data platforms can be achieved.

### Summary

According to a first aspect of the present invention, there is provided a computing device configured to receive an input and determine whether the input is a first input or a second input, wherein, for a given functional component of a cloud data platform native app: the computing device is configured to prepare, if the input is the first input, the functional component to be run in a first mode of execution, said first mode comprising remote cloud-based execution as part of a packaged cloud data platform native app; and the computing device is configured to prepare, if the input is the second input, the functional component to be run in a second mode of execution; wherein said second mode comprises either: local execution on the computing device; or remote cloud-based execution as a standalone cloud data platform functional component.

Optionally, preparing the functional component to be run in the first mode of execution comprises packaging the functional component for inclusion into the cloud data platform native app, and further optionally comprises generating a listing on the cloud data platform to make the packaged cloud data platform native app available to a consumer cloud data platform account.

Optionally, preparing the functional component to be run in the first mode of execution comprises deploying the cloud data platform native app as a single application running in a consumer cloud data platform account, and further optionally comprises subscribing said consumer cloud data platform account to the deployed cloud data platform native app prior to said deployment.

Optionally, running the functional component in the first mode of execution, and further optionally remotely testing the deployed cloud data platform native app.

Optionally, preparing the functional component to be run in the second mode of execution comprises configuring the functional component locally on the computing device, and optionally comprises building the functional component locally on the computing device.

Optionally, running the functional component in the second mode of execution by running it locally on the computing device, and further optionally locally testing the functional component on the computing device.

Optionally, preparing the functional component to be run in the second mode of execution comprises packaging the functional component for deployment to a cloud data platform as a standalone functional component, and further optionally comprises deploying the packaged functional component to the cloud data platform as a standalone functional component.

Optionally, running the functional component in the second mode of execution by running it remotely as a standalone cloud data platform functional component, and further optionally remotely testing the standalone cloud data platform functional component.

Optionally, the computing device is configured to determine whether the input is the first input, the second input, or a third input, wherein the second mode comprises local execution on the computing device, and wherein the computing device is configured to prepare, if the input is the third input, the functional component to be run in a third mode of execution, said third mode comprising remote cloud-based execution as a standalone cloud data platform functional component.

Optionally, the input comprises a command line input or an interaction by a user with one or more GUI controls.

Optionally, the computing device is configured to remotely test the cloud data platform native app using a set of test definitions if the input is the first input, and is either: configured to locally test the functional component on the computing device using the set of test definitions if the input is the second input, or configured to remotely test the functional component as a standalone cloud data platform functional component using the set of test definitions if the input is the second input. Further optionally, each of remotely testing the deployed cloud data platform native app, locally testing the functional component on the computing device, and remotely testing the functional component as a standalone cloud data platform functional component comprises running one or more shell scripts and/or executing one or more automated testing subroutines.

Optionally, wherein the cloud data platform is Snowflake.

According to a second aspect of the invention, there is provided a computer-implemented method for creating a cloud data platform native app application package, the method comprising: receiving a functional component definition; in response to a first input received via a user, either: configuring and/or building the functional component locally; or packaging the functional component for deployment to a cloud data platform as a standalone functional component; and in response to a second input received via a user, packaging the functional component for inclusion into a cloud data platform native app.

Optionally, configuring and/or building the functional component locally in response to the first input, and running the functional component locally in response to the first input. Further optionally, testing the functional component locally in response to the first input.

Optionally, packaging the functional component to the cloud data platform as a standalone functional component in response to the first input, and further comprising deploying the packaged functional component to the cloud data platform. Further optionally, remotely running the deployed functional component in response to the first input. Yet further optionally, remotely testing the deployed functional component in response to the first input.

Optionally, packaging all of the functional components of the cloud data platform native app as a cloud data platform native app application package in response to the second input. Further optionally, deploying the cloud data platform native app application package in response to the second input. Yet further optionally, running the cloud data platform native app in response to the second input. Yet further optionally still, remotely testing the cloud data platform native app in response to the second input.

Optionally, configuring and/or building the functional component locally in response to the first input, and further comprising: in response to a third input received via a user, packaging the functional component for deployment to a cloud data platform as a standalone functional component.

Optionally, wherein the first and second inputs are received via the same user.

In a third aspect of the invention, there is provided a computer-implemented method for testing one or more of a plurality of functional components for a cloud data platform native app, the method comprising: testing the one or more functional components in a first mode of execution according to one or more test definitions; wherein the first mode of execution comprises testing the one or more functional components without packaging and deploying the plurality of functional components as a cloud data platform native app.

Optionally, the first mode of execution comprises executing a test process for the one or more functional components in a local environment using the one or more test definitions. Further optionally, testing the one or more functional components in a second mode of execution according to the one or more test definitions; wherein the second mode of execution comprises executing a test process for the one or more functional components as standalone components in a cloud data platform environment.

Optionally, the first mode of execution comprises executing a test process for the one or more functional components as standalone components in a cloud data platform environment.

Optionally, testing the one or more functional components in a third mode of execution according to the one or more test definitions; wherein the third mode of execution comprises executing a test process for a packaged and deployed instance of the cloud data platform native app comprising said plurality of functional components in a cloud data platform environment. Further optionally, testing each of the plurality of functional components in the first mode of execution, wherein the step of testing the functional components in the third mode of execution comprises determining that every functional component of the plurality of functional components passes testing in the first mode of execution according to the respective one or more test definitions. Yet further optionally, a determination that every functional component of the plurality of functional components passes testing in the first mode of execution triggers the step of testing the functional components in the third mode of execution and/or a step of packaging and/or deploying the cloud data platform native app.

In a fourth aspect of the invention, there is provided a computer-implemented method for creating a cloud data platform native app application package defined based on a plurality of functional components, the method comprising: receiving an input identifying i) a command, and ii) the plurality of functional components; iteratively, for each functional component of the plurality of functional components: configuring one or more files of the functional component, executing a build process for the functional component, and gathering one or more files for packaging in the cloud data platform native app application package; and generating an SQL setup file for the cloud data platform native app application package using one or more SQL setup files of the plurality of functional components.

Optionally, updating and storing version information for the cloud data platform native app application package.

Optionally, the build process for at least one functional component of the plurality of functional components comprises compiling one or more source code files.

Optionally, the build process for at least one functional component of the plurality of functional components comprises building one or more containers.

Optionally, the input is received as either a command-line terminal input, or as an interaction with a graphical user interface.

Optionally, said steps are executed using a first cloud data platform account, and the method further comprises automatically executing, cloud data platform in response to the user input, the steps of: updating the cloud data platform native app application package to the latest version using the first account; sharing, by the first account, the cloud data platform native app application package with the second account; installing the cloud data platform native app application package into the second account as a cloud data platform application; executing, using the second account, remote testing of the installed cloud data platform native app.

Optionally, using a large language model to automatically generate, for the cloud data platform native app application package and/or at least one functional component thereof, based on a user input, one or more of: a source code object or file; a configuration object or file; a manifest object or file and/or a version control object or file; and a script, optionally including an installation script.

Optionally, determining, after receiving the user input but before automatically executing the steps, that every functional component has passed a respective one of a plurality of tests.

Optionally, in response to the user input, automatically executing a packaging process for the cloud data platform native app application; wherein said packaging process comprises recursively calling a packaging process for each of the plurality of functional components.

For any one of the second to forth aspects of the invention, optionally determining an operational status in response to a user input or command; generating a developer recommendation based on the determined operational status; and displaying the generated developer recommendation in a graphical user interface. Further optionally, either: the operational status comprises a successful completion of a configure operation, build operation, deploy operation, package operation, or test operation, and the developer recommendation comprises a recommendation of a next user input or command based on an inferred development step; or the operational status comprises an error raised by a failed operation and the developer recommendation comprises a recommendation for correcting the error. Yet further optionally, the developer recommendation is generated using a large language model based on one or more console inputs and/or one or more files for the cloud data platform native app.

For any one of the second to fourth aspects of the invention, wherein the cloud data platform is Snowflake.

In a fifth aspect of the invention, there is provided a device comprising a processor and a memory, the memory comprising instructions which, when executed by the processor, cause the processor to carry out the method of any one of the second to forth aspects of the invention, or any combination of the second to fourth aspects of the invention.

In a sixth aspect of the invention, there is provided a non-transitory computer-readable storage medium comprising instructions which, when executed by a computer, cause it to perform the method of any one of the second to forth aspects of the invention, or any combination of the second to fourth aspects of the invention.

### Brief Description of the Drawings

Embodiments are described in more detail below with reference to the appended drawings, in which:
Fig. 1 depicts an overview of a cloud data platform architecture.
Fig. 2 depicts a first application paradigm for a cloud data platform, managed apps.
Fig. 3 depicts a second application paradigm for a cloud data platform, connected apps.
Fig. 4 depicts a third application paradigm for a cloud data platform, native apps.
Fig. 5 shows an overview of a native app for a cloud data platform.
Fig. 6 provide additional details about native app implementation for a cloud data platform.
Fig. 7 highlights the complexity of developing native apps.
Fig. 8 demonstrates the increasing complexity of Snowflake app development over time, including for native apps.
Fig. 9 depicts how the complexity of a data project influences native app development.
Fig. 10 shows the steps involved in manually developing a native app.
Fig. 11a depicts a simplified example of a table. Fig. 11b depicts a definition in structured query language (SQL) for an exemplary schema. Fig. 11c depicts a definition in JavaScript object notation (JSON) for an exemplary schema.
Fig. 12 depicts an example of a build pipeline.
Fig. 13 shows an example of versioning in a development process for a native app or functional component thereof.
Fig. 14 provides an example user interface for creating a native app.
Fig. 15 depicts a simplified exemplary development environment for a native app.
Fig. 16 depicts a visual representation of a native app development process.
Fig. 17a shows a first input method for a native app development process. Fig. 17b shows a second input method for a native app development process.
Fig. 18 depicts further examples of pipelines.
Fig. 19a and Fig. 19b depict an Al tool for generating and editing infrastructure for a native app and/or one or more functional components thereof.
Fig. 20 shows a method according to a first aspect of the invention.
Fig. 21 shows a method according to a second aspect of the invention.
Fig. 22 shows a method according to a third aspect of the invention.
Fig. 23 shows a method according to a fourth aspect of the invention.
Fig. 24 provides an example computer device and cloud data platform for implementing the invention.

### Detailed Description

The detailed description set forth below provides information and embodiments of the disclosed technology with sufficient detail to enable those skilled in the art to practice the disclosure. It should be recognised that except where explicit recognition is provided to the contrary (for instance by their inclusion in an independent claim of the appended claims), none of these components or features should be taken as essential for implementing the present invention.

### Overview - data sources & ingestion

Various data sources may be used to build Snowflake native apps and functional components thereof. Data sources may be external to the user's cloud service provider. Additionally or alternatively, at least some data sources may be internal to the user's cloud service provider. The data sources may comprise a combination of internal and external data sources. At least some data source(s) may be in a multi-structured form. At least some data source(s) may be ingested in batch. At least some data source(s) may be ingested in real-time.

Data sources may comprise on-premises and/or off-premises sources. Data sources may comprise cloud sources, cloud services and/or cloud providers. Snowflake can abstract the physical storage location of source data from data consumers, thereby isolating them from the complexities of the various sources of data.

Various kinds of data source exist, as will be appreciated by those of ordinary skill in the art. As a handful of purely illustrative and non-limiting examples, data sources can optionally comprise e.g., Salesforce, SAP, Marketo, Hubspot, website logs, application logs, surveys, files, sensor data, scraped web data, social media/text data, relational databases (e.g., MySQL sources), non-relational databases (e.g., one or more MongoDB sources), APIs (e.g., REST APIs), enterprise systems (e.g., customer relationship management, enterprise resource planning, or human resources management systems), or the like. One or more data source(s) (and/or the data therefrom) may be subject to source testing for data integrity and/or data freshness.

### Overview - data interfaces & consumers

A Snowflake native app (or functional component thereof) can have an interface providing a means by which a data consumer can interact with its data and functionality (or that of one of its functional components). There may be predefined properties, parameters, setting and/or details of this interface. For example, the format of any query that should be used by a data consumer, the format and/or content that the data consumer should expect from the response to their query, and/or various other patterns, properties or behaviours governing their interaction with the Snowflake native app (or functional component thereof) may be predetermined or predefined. Access to data of a Snowflake native app (or functional component thereof) may be e.g. via one or more of: APIs; a language like SQL; visualisation options; and so forth. The interface may restrict data consumers from accessing the raw data underlying the Snowflake native app or of its functional components.

Consumers of a Snowflake native app may include any one or more authorised users, e.g., human users, either within a business or organisation or external to it. Such human users may optionally include analytical users e.g., data analysts, data engineers and/or data scientists. Additionally or alternatively, consumers may include any one or more authorised processes (e.g., automated processes and/or applications) e.g., processes within or external to a business or organisation. The consumers may be configured to produce dashboards, business intelligence reports, and the like.

Distinct interfaces of a Snowflake native app may provide output in different formats - for example, an interface could provide data as a data share, as a query into a database, or as a set of one or more CSV files (e.g., a downloadable CSV file). These formats can be thought of as distinct interfaces for providing access into the same underlying Snowflake native app.

In this way, the Snowflake native app can be designed to allow multiple access approaches, such as low/no code or programmatic approaches. Different data consumers may be able to use different tools of their choice to access data. This includes analytical engines, IDEs, APIs like SQL or GraphQL, SDKs, reports, dashboards, and/or large language models (LLMs).

### Overview - views, tables, & secondary data

As used herein, a "table" may generally refer to a basic structure in a database (e.g., in a relational database) that organises data into rows and/or columns. In various examples, each row represents a record, and each column represents a field or attribute of that record. Tables may be used to store and manage structured data.

As used herein, a "view" may generally refer to a virtual table that is based on the result set of a query (such as an SQL SELECT query). The view may not store any data itself, but may instead be a saved query (e.g., SQL query) that can be executed to retrieve data dynamically from one or more underlying tables. Views may be used to simplify complex queries, abstract the underlying data schema, and/or enforce security and access controls by limiting the columns or rows that users can see.

As used herein, a "materialised view" may refer to a variant which, unlike a typical view, stores the query result in physical storage. Materialised views may be precomputed and refreshed periodically to ensure that the data they contain is up-to-date ("fresh"). This can speed up query execution by removing the need to compute the result set on every access. Materialised views may be used to improve the performance of complex queries or reports that involve aggregations, joins, or other computationally expensive operations.

Data in a Snowflake native app or functional component thereof may comprise any appropriate combination of tables, views, material views, or other kinds of structured data which may be computed or loaded in physical or virtual form. Secondary data may be obtained by processing raw data in a database and/or by applying one or more queries to the database in a suitable query language. For example, structured query language (SQL) may be used to obtain secondary data from a database.

### Overview - databases & schemas

A database may store any kind of structured data according to a suitable schema. In some embodiments, a database may comprise a relational database. In other embodiments, a database may comprise a non-relational database such as a NoSQL database. A database may comprise e.g., an object database, document database, time-series database, special database, graph database, or the like.

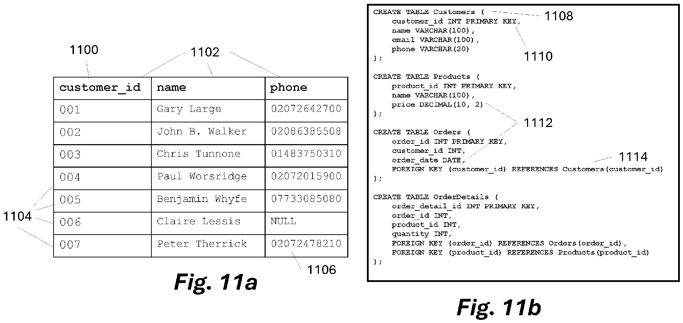

Fig. 11a depicts a simplified example of a table (or view) 1100 as may typically be found in a relational database. In the relational model, data is organised into one or more tables like table 1100, each having a plurality of rows 1104 and columns 1102. Each row may represent a distinct record, and each column may represent a distinct attribute, field, or property. A value 1106 or a NULL entry may be provided for any given row-column pair. That is, each row/record 1104 may comprise a value 1106 (or NULL) for each column/field 1102 (or equivalently, each column may be said to comprise a value (or NULL) for each row). The data in the relational database can be structured to follow a predefined schema defining the structure, constraints, and relationships of the data.

Fig. 11b depicts a definition in structured query language (SQL) for an exemplary schema. The exemplary schema may be a schema for a relational database, such as a database of the type in which table 1100 of Fig. 11a may appear. The illustrated schema definition includes a plurality of table definitions 1108, each declaring a distinct table for the database with a unique table name.

In the illustrated example, each table definition 1108 comprises a primary key constraint 1110, which uniquely identifies each record (i.e., row) in the respective table. A database management system implementing the relational database may enforce primary key constraint 1110 in the sense of ensuring that the relevant column of each table is free of duplicate or null values.

Other constraints may be applied within the relational database. For example, each column/field may be subject to a datatype and/or length constraint 1112, specifying the type of value that each record can take for that field (e.g., string, integer, decimal, date, etc.) and/or further qualifying that value in terms of e.g., allocated length, number of significant figures, and the like. Additionally or alternatively, one or more columns of a table may be subject to a foreign key constraint 1114, establishing a link from a column in the referencing table (designated as a foreign key) to a column in the referenced table (e.g., a column designated as a primary key). A database management system implementing the relational database may enforce referential integrity between the foreign key and its target.

Still other constraints which may additionally or alternatively be applied and enforced within the relational database will be known to those of ordinary skill in the art.

It is not essential that a database used in accordance with embodiments of the present invention use a relational database, and other kinds of database may be used instead. Examples include non-relational databases such as a NoSQL (Not only SQL) database, object database, key-value store, document database, and so forth. The non-relational database may follow any one of a variety of possible schemas, including e.g., schemas having a nested structure or other more complex cases.

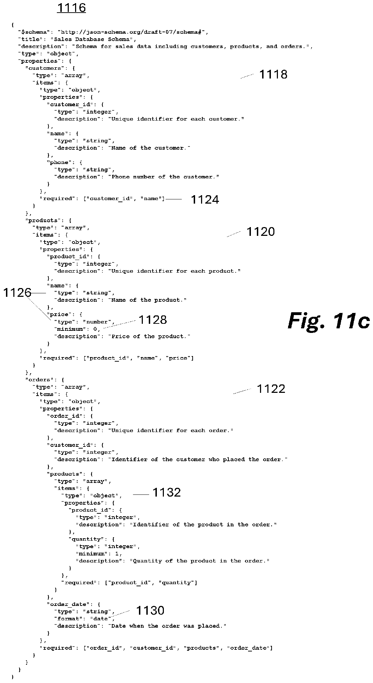

Fig. 11c depicts a definition in JavaScript object notation (JSON) for an exemplary schema 1116. The exemplary schema may be a schema for a non-relational database, such as a database of the type in which the data seen in table 1100 of Fig. 11a may appear (albeit without necessarily having a strictly rows-and-columns relational table structure). The illustrated schema definition includes a plurality of objects definitions 1118, 1120, 1122 (respectively for customer data, product data and order data). Each of these top-level objects may be thought of as analogous to one of the table definitions 1108 of Fig. 11b.

Schema 1116 may comprise one or more structural or schema-based constraints. For example, a non-null or required constraint 1124 may specify the presence of values in a given one or more columns as being essential. A database management system implementing the non-relational database may enforce required constraint 1124 by ensuring that a value is always provided for each column designated as necessary.

Schema 1116 may additionally or alternatively comprise one or more field-level constraints, i.e., constraints on values taken by fields rather than at the database's structural level. For example, field-level constraints may include any one or more of: datatype constraints 1126, range constraints 1128, format constraints 1130 (specifying a particular pattern or regular expression that data in a field must match), or any other appropriate field-level constraint known to those of ordinary skill in the art.

Another example of a field-level constraint is a value-list constraint (sometimes called an "enum" or "enumerable" constraint), which specifies that the value taken by the field must be one of a finite number of predefined acceptable values (e.g., in a list) - for instance, a value-list constraint for a field called "day" may require a value equal to one of "MON", "TUE", "WED", "THU", "FRI", "SAT" or "SUN".

Schema 1116 may in some embodiments have a "flat" structure, i.e., wherein all of the data is representable as a single table of rows and columns. However, in various embodiments a schema 1116 may include nesting 1132 - each object may optionally include reference to one or more further objects and/or one or more arrays, and each array may optionally include reference to one or more further arrays and/or one or more objects. In the example shown in Fig. 11c, for instance, "orders" defines an array of objects, each object having a "products" property which itself defines an array of objects, each object having a first integer uniquely identifying a product and a second integer identifying a quantity ordered of that product. In this manner, nesting 1132 can permit the representation of complex data structures and relationships within the schema of a database.

### Snowflake native app creation and setup

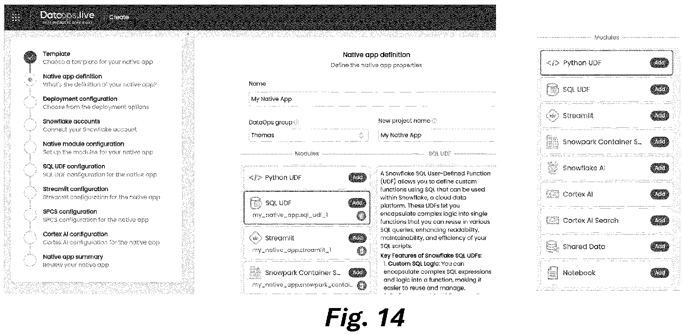

Referring to Fig. 14, there is depicted a Snowflake native app creation interface in accordance with various aspects of the present disclosure. The Snowflake native app creation interface may be designed and configured to facilitate the task of creating and configuring a Snowflake native app from scratch. The Snowflake native app creation interface may in general receive one or more inputs from a user interacting with a user interface (e.g., with a graphical user interface or "GUI") and, based on the received inputs, generate one or more files providing code or configuration data for the Snowflake native app. By implementing one or more of the features described hereinbelow, a user can be enabled to build a functional Snowflake native app without needing to write a large amount of code (as would have been required in prior development systems). In some cases, the user can be enabled to build a functional Snowflake native app without needing to write any code at all. The Snowflake native app creation interface may also reduce the amount of configuration (e.g., editing of files) required from the user to create a functional Snowflake native app.

The Snowflake native app creation interface may comprise a plurality of interface components. Each interface component may be rendered in a different screen, window, panel, pane, or sub-interface of the GUI. Alternatively, all of the interface components may be rendered in one-and-the-same single screen, window, panel or pane in the GUI. Alternatively, a plurality of screens, windows, panels and/or panes may be provided, but with at least one such screen, window, panel or pane comprising two or more interface components. Other appropriate arrangements will be known to those of ordinary skill in the art. A navigation pane may be provided to enable a user to move between distinct interface components of the Snowflake native app creation interface and/or to display to the user which interface component they are currently viewing, optionally displaying the current interface component in context by further displaying one or more (or all) of the other interface components.

One example of an interface component is a template component. A template component may provide a user with one or more controls for selecting a template (from a plurality of predefined templates) to be used as a basis from which to create a Snowflake native application. One example of a predefined template may be a minimal template comprising a predefined directory structure containing a small number of key files for making the Snowflake native app, e.g., a readme file, a setup script containing SQL statements that are run when an account installs or upgrades the Snowflake native app, a manifest file defining properties required by the application package, and/or a markup file used by the Snowflake command-line interface (CLI) tool to discover the Snowflake native app's code and interact with the builder Snowflake account with all relevant privileges and grants. Other examples of a predefined template may include: a template for Snowflake native app using Snowpark container services (e.g., Docker); a template for a Snowflake native app using Java extension code and a Streamlit application; a template for a Snowflake native app using JavaScript extension code and a Streamlit application; a template for a Snowflake native app using Python extension code and a Streamlit application; and so forth.

Another example of an interface component is a native app definition component, as shown in Fig. 14. The native app definition component may provide various controls for customising a Snowflake native app (including one generated from a template), for example including a Snowflake native app naming control, a user group select control, and/or a project naming control. The native app definition component may additionally or alternatively comprise a functional component selection control. The functional component selection control enables a user to choose one or more functional components for inclusion in the Snowflake native app from a list of a plurality of functional components. The plurality of functional components can include, but is not limited to: Python user-defined functions (UDFs); structured query language (SQL) UDFs; Streamlit applications; Snowpark container services; Snowflake Al components; Cortex Al components; Cortex Al search components; Snowflake shared data components; and Snowflake notebook components. Optionally, the native app definition component can further comprise a functional component descriptor control, which displays a summary of the functional component, and/or directions for using the functional component, to the user.

Another example of an interface component is a deployment configuration component. A deployment configuration component can provide controls for a user to select and/or adjust options for how and where the native app will be deployed in Snowflake by the builder account.

Another example of an interface component is a Snowflake account connection component. A Snowflake account connection component can provide controls for connecting the Snowflake native app creation interface to at least a first Snowflake account, and optionally also to a second Snowflake account as discussed in more detail elsewhere herein. The first Snowflake account may be an account for the builder of the Snowflake native app. The second Snowflake account, where employed, may be an account for a test consumer/user/customer of the Snowflake native app. The first Snowflake account may be used to test at least part of the functionality of the Snowflake native app. Additionally or alternatively, the second Snowflake account may be used to test at least part of the functionality of the Snowflake native app.

Controls for connecting the Snowflake native app creation interface to any given Snowflake account (whether the first or the second) may comprise any one or more (or all) of: input means for specifying an account name; input means for specifying a username; input means for specifying a password; input means for specifying a data warehouse; input means for specifying a user role; and a control for initiating the connection (e.g., in response to a mouse click).

Other examples of interface components include a module configuration component, an SQL UDF configuration component, a Streamlit configuration component, a Snowpark container services configuration component, and a Cortex Al configuration component. These components may provide controls for setup of the plurality of functional components selected for the Snowflake native app and for individually configuring each of the respective functional components selected (e.g., specifying operational parameters). A summary interface component may enable a user to review their selections prior to creation of the Snowflake native app.

In some embodiments, the Snowflake native app creation interface is limited to receiving the user inputs (e.g., one or more selections of functional components) and, in response to a further user input (e.g., interaction with a "Generate" button), generating at least some code and/or configuration files for the Snowflake native app. In some embodiments, the Snowflake native app creation interface is configured to carry out additional steps in response to the further user input. These additional steps may comprise one or more of: building (or initiating a build of) the Snowflake native app or at least one functional component thereof; deploying the Snowflake native app or at least one functional component thereof; generating, setting and/or assigning one or more roles and/or permissions for the Snowflake native app or at least one functional component thereof, subscribing the second account, doing the packaging, installing the thing and running it and/or testing it.

Certain Snowflake feature sets may add complexity to the development process that may extend beyond a data engineer's standard skill-set. For example, Snowpark execution environment components such as Snowpark Container Services (SPCS) requires knowledge of containerisation development flows which aspects of the present invention are able to simplify for the developer. Likewise, Snowflake provides "Cortex" LLM capabilities, with access via SQL and Python; the various Cortex capabilities are typical examples of "functional components" that developers may wish to use to solve a data engineering problem without necessarily being experienced with. Some functional components (like a Streamlit app and Cortex Search) may frequently be combined in practice by developers, in which case such combinations can be supported with different as discussed above, templates, jump-starting project development.

### Development environment for Snowflake functional components

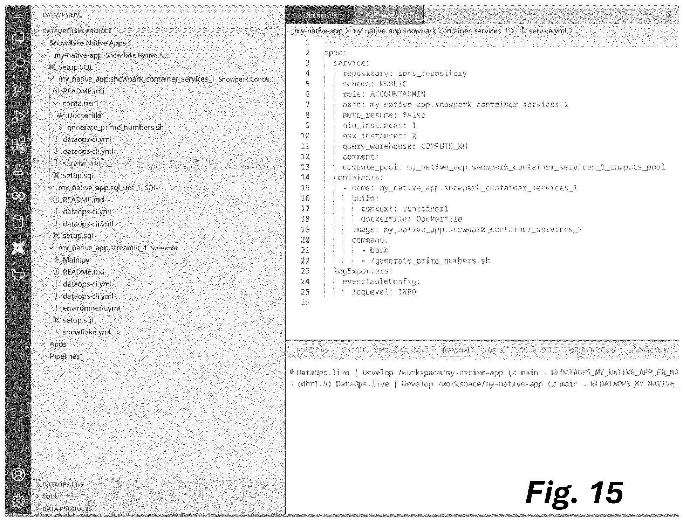

Referring now to Fig. 15, there is depicted a (simplified) exemplary development environment for a Snowflake native app. A development environment may generally comprise an application, such as a web application configured to run in a user/developer's browser, or a native application configured to run within the operating system on the user/developer's device. Exemplary web browsers include e.g. Microsoft Edge; Google Chrome; Mozilla Firefox, Opera, and Safari. Exemplary devices include e.g., desktop computers, laptop computers, tablet computers, smartphones, and the like. Exemplary operating systems include Windows, Linux, macOS and the like. The development environment may comprise a graphical user interface (GUI) providing a user with access to the necessary infrastructure, tools, and processes for developing, testing and/or deploying a data product.

In the illustrated embodiment, the development environment comprises a breadcrumb indicating to the user the name and/or path of a file or other object currently being edited.

In the illustrated embodiment, the development environment comprises an edit pane. The edit pane may be configured to permit user interaction for the purpose of editing an object, e.g., editing the contents of a file by using a keyboard and/or mouse. Examples of files that may be edited by a user include configuration files, text (.txt) files, and files written in various high-level languages such as query languages like SQL, markup languages like YAML, JSON or HTML, or programming languages like Python, Java or C.

In the illustrated embodiment, the development environment comprises a command line interface. The command line interface may be configured to receive textual user input (e.g., via a keyboard) and/or to display feedback, notices, warnings, error messages and/or other appropriate information to a user/developer working in the development environment. The content of the command line interface may be based upon content or properties of files being worked on, statuses or events pertaining to pipelines being run, test outcomes, or the like. The content of the command line interface may be generated, updated and/or refreshed in response to a keystroke (e.g., "enter") or some suitable GUI element.

In the illustrated embodiment, the development environment comprises a file explorer pane. The file explorer pane may be configured to depict graphically a plurality of files for the Snowflake native app. Optionally the files may be depicted according to the directory structure in which they reside, as illustrated in Fig. 15. The development environment may be configured to enable a user to browse files and directories in file explorer pane by interacting with the individual file and directory names displayed therein. For instance, interacting with a dropdown control for a directory may show or hide the files and sub-directories therein; interacting with a file containing data capable of being rendered as text (e.g., files containing code in a high-level language like SQL, Python, Java or Javascript, or configuration data encoded in markup languages such as YAML) may cause said text to be rendered to the display pane. Such interactions may be made using any suitable input means, such as left-clicking the relevant control using a mouse, for example.

The development environment may comprise window management controls enabling the developer/user to move, resize, minimise, maximise, restore or close the development environment (or an individual window thereof).

Other optional components of the development environment include e.g., means (e.g., the command line interface or another GUI window) for directly interacting with version control mechanisms; means for setup and management of data source(s) and database storage; means for setup and management of data processing and/or testing frameworks; pipeline setup/management/orchestration/execution controls; and monitoring/logging means.

The above-mentioned components (panes, controls, outputs etc) may in various embodiments either all be provided within the same window of an application, or may be provided in separate windows. A single window may provide all of the components, but may use various window management means or GUI elements known in the art (e.g., tabs and/or ribbons) to prevent the need for all components to be displayed simultaneously.

### Development cycles - overview

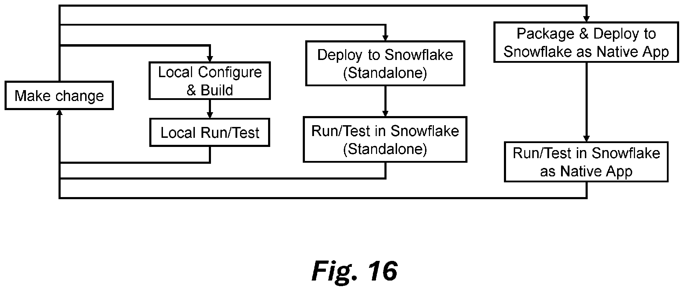

Referring to Fig. 16, there is depicted a visual representation of a Snowflake native app development process in accordance with embodiments of the present invention. In contrast to prior approaches, where development may advance by iteratively making a small change to part of a functional component and then re-packaging/re-deploying/re-installing the entire Snowflake native app, the present inventors have found an improved development process in which a change can be implemented, effected and optionally tested according to any one of three "cycles". In each cycle, the change implemented by the developer is enacted and the functional component that is the subject of the change is run in some way such that its behaviour is modified accordingly. This running may comprise running in such a way as to be visible and/or interactable to the user; additionally or alternatively this running may be for the purpose of carrying out automated testing using predefined test definitions and predefined (e.g., algorithmically generated) test data.

In a first, "local" build cycle (which may optionally occur on the developer's own computing device, or which may be carried out by a cloud-based IDE (such as the DataOps.live Develop Cloud IDE provided by DataOps Software Limited) in response to inputs provided by the developer's device), the functional component subject to the change is configured and built locally, and run/tested locally. "Local" in this sense means within the same development environment, which may be the physical device used by the developer or within a cloud-based IDE accessed by the developer via their physical device, but not within Snowflake itself. In various embodiments, the cycle concerns building/running/testing only the single functional component that was changed.

This cycle may take in the order of 10 seconds or less to complete, e.g., from about 1 second to about 10 seconds, from about 1 second to about 8 seconds, from about 1 second to about 6 seconds, from about 1 second to about 4 seconds, from about 2 seconds to about 10 seconds, from about 2 seconds to about 8 seconds, from about 2 seconds to about 6 seconds, from about 2 seconds to about 4 seconds, from about 3 seconds to about 10 seconds, from about 3 seconds to about 8 seconds, or from about 3 seconds to about 6 seconds.

In a second, "Snowflake standalone" build cycle (which may optionally be driven from a cloud-based IDE similarly), the functional component subject to the change is deployed to Snowflake as a standalone Snowflake functional component and run/tested as a standalone Snowflake functional component, i.e., as a Snowflake functional component that is not part of a Native app application package. In various embodiments, the cycle concerns building/running/testing only the single functional component that was changed.

This cycle may take in the order of 30 seconds or less to complete, e.g., from about 5 seconds to about 30 seconds, from about 10 seconds to about 25 seconds, from about 15 seconds to about 25 seconds, or from about 5 seconds to about 15 seconds.

In a third, "Snowflake full native app" build cycle (which may optionally be driven from a cloud-based IDE similarly), the entire native app to which the changed functional component belongs is bundled and deployed to Snowflake as a Snowflake native app, and run/tested in Snowflake as a Snowflake native app. In various embodiments, the cycle concerns the Snowflake native app as a whole, i.e., as one atomic entity.

This cycle may take in the order of 120 seconds or less to complete, e.g., from about 20 seconds to about 120 seconds, from about 20 seconds to about 90 seconds, from about 30 seconds to about 100 seconds, from about 40 seconds to about 110 seconds, from about 50 seconds to about 120 seconds, from about 20 seconds to about 60 seconds, from about 40 seconds to about 80 seconds, from about 60 seconds to about 100 seconds, or from about 50 seconds to about 80 seconds.

The process depicted in Fig. 16 advantageously permits small changes to be enacted and components to be tweaked or perfected without necessitating the delay incurred in building and deploying the entire Snowflake native app as a whole (a wait time of up to 120 seconds as mentioned above). Thus, faster development is possible. When a functional component appears to work satisfactorily in one environment or execution mode, the developer may progress to a subsequent cycle in the process to scale up the testing.

Not all of the three above-mentioned cycles are essential - a device may be configured solely to perform the local build cycle and full native app build cycle, or otherwise solely to perform the Snowflake standalone build cycle and the full native app build cycle, to give just two examples, whilst still realising the benefits of the present invention.

When testing the Snowflake native app as such in the final development cycle of Fig. 16, the Snowflake native app may be considered as having passed or failed its tests as a single atomic element.

The way a developer configures a functional component in one execution mode or environment is different to how you they will configure it in another execution mode or environment. Likewise, more generally, the same command-line-interface-executed "verb" (e.g., configure, build, clean, deploy, undeploy, run, test, test-local, test-remote, package, package-for-native-app, subscribe, release) can be made to execute different specific steps depending on its environment or execution mode (i.e., which of the three development cycles shown in Fig. 16 is being followed). These "verbs" or "commands" may be received as text via a command line interface. In some embodiments, the command-line interface may be configured to process such inputs in a manner which is "context-aware" or "polymorphic", in the sense that the actions executed in response to receipt of the same command (or closely related commands such as "test-local/test-remote") may differ depending on the intended environment/execution mode/development cycle. For some commands or verbs, the "full native app" execution mode/build cycle may comprise iteratively or recursively calling the same verb for each individual functional component within that Snowflake native app.

As one illustrative example, a Streamlit application can be considered. When the application runs locally, it may run full-page inside a window of a web browser. When the application runs in Snowflake standalone mode, it may comprise some headers and footers surrounding the application, effectively as a wrapper layer (e.g., comprising additional iFrame or <div> elements, say) around the graphical display which would otherwise have been rendered in the page. When the application runs as a component part of a Snowflake native app, the display may include even further additional "wrapper" elements again. The build, deploy and test processes of the present invention are configured to account for these differences in how the same functional component is configured and presented.

Computer programs according to the present invention may be configured to 'receive' any of a plurality of different possible user-input build commands (e.g., configure and build a functional component locally; configure, build and run/test a functional component locally; package and deploy a functional component to Snowflake and test it remotely in Snowflake; package the functional component with other functional components as a Snowflake native app, deploy the Snowflake native app and test it remotely, etc). Computer programs according to the present invention should advantageously be able to handle any of the set of commands which may potentially be received. At least one such command may comprise packaging or deploying the functional component as a Snowflake native app.

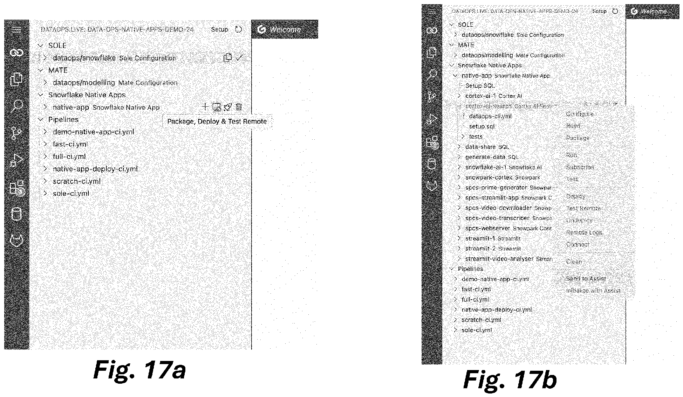

When handling each command, the present invention always uses the same single codebase and the same set of tests (including test definitions and test data), but the number of steps and the environment in which they are executed will vary. Receiving a command may be e.g., in a command line interface, or via clicking on a control inside a GUI (e.g., right-clicking a control to bring up a context menu and left-clicking an item in said menu; or, left-clicking a control as illustrated in Fig. 17a to bring up a context menu e.g., as shown in Fig. 17b and then clicking an item in said menu). The invention provides a single straightforward integrated means for handling any of these commands in one place, e.g., by having all such GUI controls appearing in and/or accessible via the same GUI, or a window thereof

Once a developer gets their component working locally, it can be deployed and tested in Snowflake, and tested there, before going back and fixing it until it works in each successive environment. The developer can develop and test each functional component individually and then use a pipeline to do all of the steps (plumbing, infrastructure building, testing and the like) required to obtain a demonstrably working and functional Snowflake native app.

### Development cycles - local development cycle

The local development cycle is run via/within a local UI or IDE. A developer may open their code (e.g., in main.py) and make a change within the development environment.

It should be noted that although the term "local" is employed herein in relation to execution on a developer's own device, the meaning of the term is not so limited. Development may comprise use of a development environment hosted in the cloud (e.g., GitPod, to name one non-limiting example). For the sake of clarity and simplicity, the same term "local" is used herein to refer to both on-device and cloud-based development.

"Configuring" in the context of the local development cycle may comprise e.g., copying files into a build directory, installing the dependencies or other packages needed at build time, and/or installing the dependencies or other packages needed at runtime.

"Building" in the context of the local development cycle may comprise compiling source code into object code (in the case of compiled programming languages). Additionally or alternatively, it may comprise building one or more containers for code using one or more containerisation services such as Docker. It may optionally further comprise verifying that all requisite libraries are present. *Development cycles - Snowflake standalone functional component development cycle*

The Snowflake standalone development cycle may comprise deploying a (single) functional component to Snowflake and optionally testing it there. The output of the cycle may include e.g., a URL with which the developer can interact (e.g., clicking on) to be taken to a Snowflake login page for logging into their Snowflake account, after which the result of running the functional component may be displayed.

As an example, a Streamlit application can run in a Snowflake account for users to access. The process for Snowflake standalone deployment may comprise: (1) configuring files, (2) building assets such as a SPCS container, and (3) deploying files to Snowflake in the correct place. These steps would result in that component being useful in Snowflake for the target account. That component can be tested, in a similar manner to its local testing. The same test data and test cases/definitions can be used.

When deploying the functional component as a Standalone Snowflake functional component, steps may optionally be carried out to manage version control e.g., by generating a new version number and writing it to a manifest file for the functional component. Version control may help to ensure that back-compatibility of FCs is maintained, and/or to help avoid developers from unknowingly making "breaking" changes to their code, configuration or infrastructure that may cause errors to be generated by a downstream consumer.

In contrast with the local build cycle, the Snowflake standalone build cycle involves configuring a specific URL for the developer's database and schema in order to access their developed objects in Snowflake.

Authentication steps may be executed at the Snowflake platform, optionally including entering a user password, providing an input to indicate an authorisation or permission selection, and the like. These steps may be carried out automatically by the IDE as part of the Snowflake standalone development cycle.

### Development cycles - Snowflake native app development cycle

The "full" Snowflake native app development cycle applies to and operates in the context of the Snowflake native app as a whole, comprising out a complete build, deployment and run (and/or optionally test) of the native app. The entire native app can be deployed as one atomic piece, in contrast to some known development approaches. The result is the automated execution of a completely different set of code, different packaging steps and different processing steps to those carried out during the Snowflake standalone build cycle. Because the resulting Snowflake native app is fully packaged, customers or test users do not need to separately install all of the dependencies required by the native app; it comes with everything needed built-in.

Optionally, when the "package" command is called in the context of the Snowflake native app build cycle, an iterative or recursively call is made to the "package" code of each of the individual functional components within the Snowflake native app.

The Snowflake native app build cycle may in one example comprise some or all of the following steps: Preparing for deployment by ensuring that all necessary roles and permissions are set up. Setting up the target environment where the app will be deployed, including configuring Snowflake account(s), setting up databases, schemas and roles. Using a GUI and/or CLI to create an application package containing all of the data, business logic and configuration files required for the native app. Executing a command to deploy/install the app package into the target environment. Configuring the application settings as needed (e.g., setting environment variables, configuring access controls, setting up any necessary integrations with other systems).

The full native app cycle may optionally further comprise testing the application - e.g., running any automated tests, performing manual checks if desired, and/or verifying that integration with other systems is successful.

When deploying a functional component as part of a Snowflake native app, the native app functionality acts in some ways as a wrapper around one or more of the functional components. The main processing difference between the standalone and native app development cycles is the required combination of the functional components as a package, followed by the subscribing, installation and testing. For example, a Snowflake native app containing a Streamlit application may be deployed as a "package" in the target account again, but this Streamlit application may be inaccessible until it is installed in an account (either the same account or a different account). As part of the testing procedure, the most robust tests may use a different Snowflake account (or a plurality of Snowflake accounts) to install the package as an application. Once installed, the native app can be run, granting access to the Streamlit application.

The full Snowflake native app cycle may be more complicated and comprise more optional paths than the standalone and local build cycles. "Deploy" commands may be handled differently in these distinct build/development cycles. The automated Snowflake native app build cycle may comprise incrementing a version identifier for the Snowflake native app when it is deployed.

A developer may define everything needed at the component level for individual functional components, each of which defines an element of setup for the native app - a developer may create "hooks" to initiate setup post-installation (e.g., in response to a new permission being added). In such cases, there may be provided a series of files in each component to be gathered together and applied as unique setup hooks in the native app.

### User interfaces

As illustrated in Figs. 17a and 17b, the development environment may comprise an action control. Once a user/developer has specified their desired modification to the functional component (or part thereof), they may use the action control to perform various subsequent steps in the development process. For example, the action control may be configured to enable the developer to cause validation of one or more files, testing of one or more functional components (either locally, standalone in Snowflake or as a native app), application of one or more data transformations, execution of a backwards-compatibility test/determination, and/or any other suitable action(s) (e.g., processes from a build pipeline).

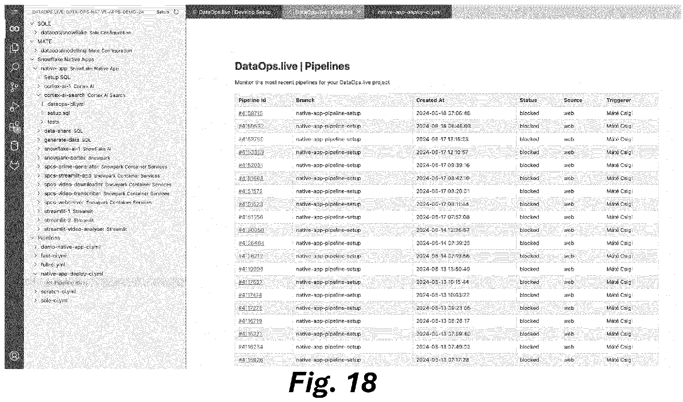

The command-line interface shown in Fig. 15 may be configured to determine the active directory in which commands are being run, and infer from it which behaviour to follow, i.e., which execution mode to execute the given verb or command in. The explorer pane shown in Figs. 17a and 17b may further be used to view pipelines (see Fig. 18), and/or bring up a developer-assist means, e.g., a window comprising advice or recommendations generated from source code or configuration files using a model such as a large language model (LLM).

### Development cycles - pipelines & builds

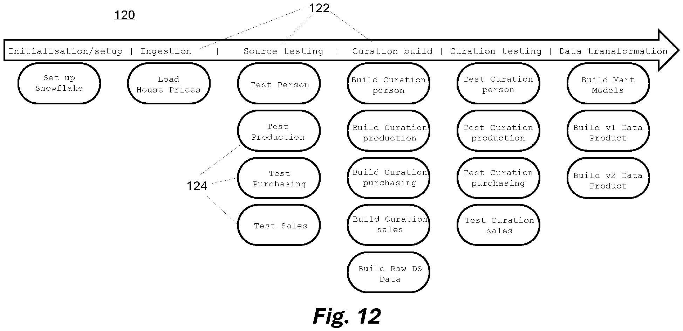

Native apps and components thereof may be built using suitable means that will be known to those of ordinary skill in the art. In some embodiments, the native app or component thereof can be built by running one or more jobs or processes. In some embodiments, a pipeline may be used, though it will be understood that such a pipeline is not essential. Referring now to Fig. 12, there is depicted an exemplary automated pipeline that a platform may execute. The pipeline comprises a plurality of jobs, which may optionally be organised (as illustrated) into a plurality of stages. Each job represents an individual step of the process for ingesting data and transforming it into the final native app or functional component thereof. In some embodiments, jobs may run either successfully or unsuccessfully (i.e., may "succeed/pass" or "fail"). In some embodiments, failure of one job may cause the pipeline as a whole to fail. This may entail the pipeline and/or one or more of its jobs being interrupted before execution is finished; additionally or alternatively it may entail interruption of the pipeline without building one or more models, artifacts or data products; without deploying a native app or functional component thereof; and/or without publishing metadata about a native app or functional component thereof.

In some embodiments, all jobs of a pipeline may be performed successively in a sequence with each job commencing only after the previous job has finished. Advantageously, in some embodiments parallelisation may be used to speed up the overall pipeline, with two or more jobs from the same stage running concurrently, with synchronisation only applied at the stage level, rather than the job level. One or more desired pipeline behaviours may be specified by a user. Additionally or alternatively, information about the "latest" pipeline run by a developer (and/or about its resultant build) may be shown to the developer (e.g., the pipeline status such as "running", "completed/success", "terminated/failure" or the like), for example via a development environment.

Pipelines may be used to implement a variety of different behaviours, such as hourly, daily, or weekly ingestion jobs. A pipeline may in general comprise jobs for moving data, virtualising data, transforming data, and/or caching data in memory. A pipeline may comprise a data lakehouse, a data fabric, or the like. A pipeline may provide orchestration capabilities to ensure that the jobs in the pipeline are executed in the correct order and dependencies are met, thus increasing reliability, and reducing the risk of errors. In some embodiments, the structure of jobs within the pipeline may comprise a directed acyclic graph (DAG).

Each pipeline may be defined in a file of any suitable form (e.g., a configuration file comprising a markup language such as YAML). The pipeline file may be populated with code provided by a developer. A data product developer may be able manually to run (i.e., execute) the pipeline once defined. Individual jobs within the pipeline may be written in suitable language (e.g., YAML). Each job definition may be written in such a way as to identify the pipeline to which it belongs (and optionally, where applicable, the stage of said pipeline to which it belongs). Whilst a pipeline may in various embodiments be defined in a single monolithic file, it may be advantageous for development to split the pipeline conceptually into individual jobs having their own files. Optionally, to further aid development, the development environment may permit a developer to define stages and/or parameters for the pipeline too (which may be also defined in their own files).

A "stage" of a pipeline can be used to define a subset of jobs from the overall pipeline which are to be executed in parallel. "Variables" which control the behaviour of a pipeline and/or its individual jobs/stages may be defined.

In some embodiments, as illustrated, a pipeline may comprise one or more Snowflake setup jobs in a setup stage, via which Snowflake can be automatically configured and/or where bootstrapping may occur.

In some embodiments, a pipeline may comprise one or more ingestion jobs (e.g., in an ingestion stage), in which the data is collected from the various sources (such as databases, files, APIs, streaming platforms, or other suitable data sources such as those mentioned elsewhere herein).

In some embodiments, a pipeline may comprise one or more source testing jobs (e.g., in a source testing stage), in which tests are executed upon the source data (e.g., as loaded in a database) to validate completeness, accuracy, consistency, quality and/or other desirable criteria expected from the source data.

In some embodiments, a pipeline may comprise one or more build jobs (e.g., in a source testing stage), in which a build may be generated for tables/views, and/or for any other models built according to the pipeline.

Other examples of jobs/stages which may form part of a pipeline include e.g., jobs/stages for initialisation of a data vault; jobs/stages for data transformation; jobs/stages for testing of the transformation/transformed data to validate the transformation; jobs/stages for automatically generating documentation for native apps or functional components built in the pipeline; and/or jobs/stages for automated cleanup at the end of pipeline execution. Other suitable examples of pipeline jobs, stages, variables and configurations will be readily apparent to those of ordinary skill in the art.

### Versioning

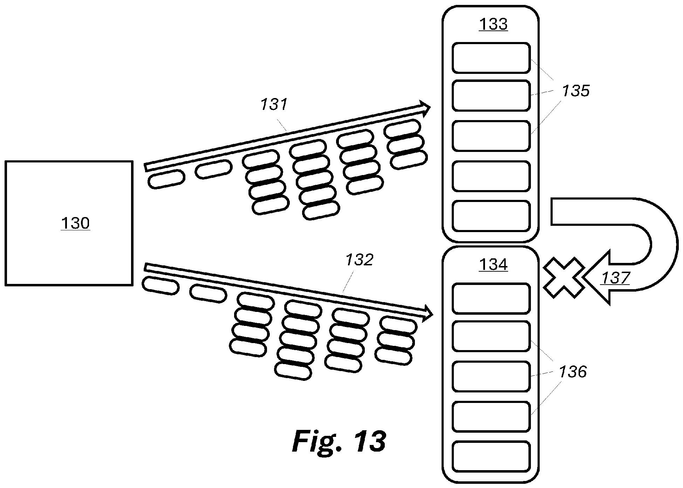

Referring now to Fig. 13, an example of versioning in a development process for a Snowflake native app or functional component thereof is depicted. A data product developer may make modifications to code or data objects e.g., changes relating to the data product's sources, schemas, models, constraints (e.g., structural or field-level constraints), SLIs, SLOs, and so forth. Any such modification may be considered either a "breaking" change, or a "non-breaking" change, based on whether the modification gives rise to a potential for one or more properties of the native app/component which were formerly guaranteed to data consumers in a previous built to be lost (thus opening up the possibility that one or more processes relying on the native app/component and its data can stop working correctly, i.e., to "break").

### Testing

The present inventors have discovered that by using the systems and methods described herein, a developer can take the same single set of tests and intelligently apply it to all three (or both, if just two being used) execution modes such that it is not necessary to write new test definitions or generate new test data for different modes of execution. Testing can be automated, and a standard interface for that testing can be provided.

For example, depending on which execution mode is used, a developer may change the STREAMLIT_URL parameter used for testing a Streamlit application. However, none of the application code, test definitions, or test data should need to be changed - only the way the tests are carried out (which is automated).

To test a Snowflake native app in the most robust possible fashion, one can use two Snowflake accounts - a producer or "builder" account for developing it, and then a second (customer) account to test it.

The present invention's automated testing of Snowflake native applications and functional components thereof is advantageous beyond the mere fact that it is automation. Automating the testing is not limited to saving time for the developer or user who otherwise would have been tasked with running the tests - it also enables the extent and breadth of the testing to go beyond what any user would be able to carry out manually, thus vastly improving the tests' capacity for finding possible errors, bugs, exploits or unintended behaviours of the Snowflake native app or functional components thereof. Not only is the ability to test any one given functional component improved, but the range of components that can be tested to any given standard (up to a certain level of coverage or robustness, say) is increased. For instance, manually testing a Docker container in Snowpark containing code for deterministically generating a large quantity of numerical data may be limited to tests having a low degree of assurance or coverage compared with the automated approach taken in accordance with the present invention.

Taking a Streamlit application as an exemplary functional component, examples of testing are now discussed.

Typically, all tests are run in a clean, "fresh" environment without any browser cookies. These tests often involve searching for specific text input fields and entering data therein. The test framework should advantageously be able to recognize that the Snowflake UI has additional layers, such as iFrames or extra Div elements-sometimes three or four layers deep-before reaching the actual HTML DOM of the application. These layers are not found in the "local" execution mode. The present invention can be configured to ensure that the necessary prerequisites for testing are set up in a deployed environment, while maintaining a pushable library for updates. The library "Playwright" may be employed for UI testing (e.g., testing Streamlit apps), which enables a developer setting up the automated test process to bring up the application, interact with its elements, and automatically generate the necessary code.

In one embodiment, testing of a complete Snowflake native app uses two accounts, i.e., a first "builder" account responsible for packaging and deploying the Snowflake native app application package, and a second "customer" account responsible for actually executing the test cases on their installed Snowflake native app using the test data. This dual-account testing style advantageously enables testing to be performed for different geographical regions (e.g., North & South America; Europe & Middle East; Asia Pacific and China) and different cloud service providers (e.g., Amazon Web Services (AWS), Google Cloud Platform, Microsoft Azure). Such testing is critical for large-scale enterprises, who may wish to use their developed Snowflake native app in, or provide it for, multiple areas, use cases and infrastructures.

### Developer assist - AI-generated infrastructure

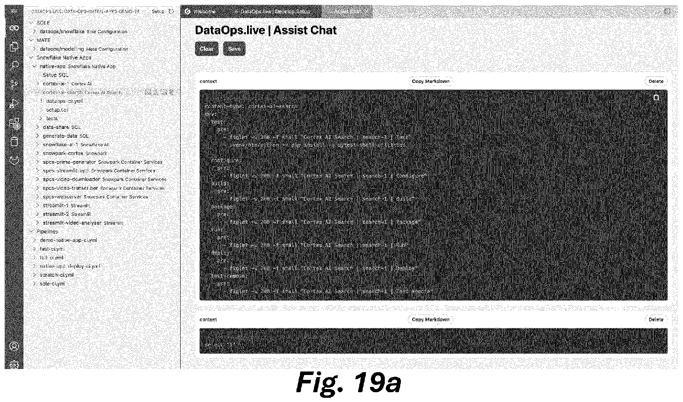

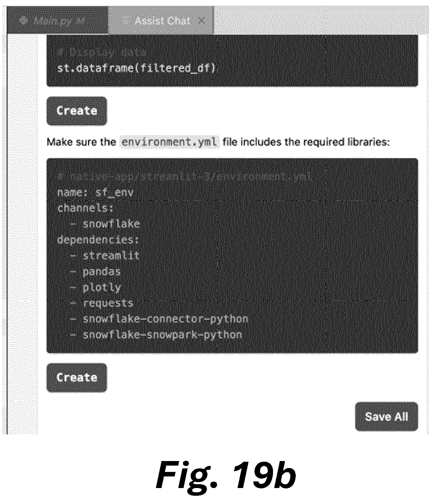

Referring to Figs. 19a and 19b, there is depicted an Al tool for generating and editing infrastructure for a Snowflake native app and/or one or more functional components thereof.

As discussed hereinabove, the Snowflake native app creation interface may comprise an input box for a developer to give a description to their native app and/or an input box for giving a description to each of their functional components. The former description may be used to generate a basic skeleton for the Snowflake native app, including a selection of functional components therein. The latter description can be used to initialise the creation of these functional components and setup thereof.

In either case, the development environment or native app creation interface may be configured to receive the written description and builds a Snowflake native app (or functional component) that performs the tasks and/or fulfils the conditions set out in the description (typically by using an LLM). This enables a fully-featured functional component or native app to be built without the developer writing any code. The developer may simply enter a description during initial setup in the menus.

As an illustrative example, a user may enter the following text for a description of a Streamlit application in order to indicate the desired behaviour:
This Streamlit app does the following:
- Query the DIM_CUSTOMER table (in the STARSCHEMA schema) generated by this model in Snowflake as input data, create a streamlit app which will allow the user to explore this data with summary graphs and a slider to filter for TOTALCHILDREN.
- Include a pie chart summary by COUNTRYREGIONCODE and Education. Include all the graphs above the results table as thumbnails across the page.
- Add a count of the number of returned records to the top of the page.
- Limit to the first 100 rows.

The interface/environment may be configured to then produce code and configuration data for satisfying the user-specified requirements based on a language model taking the above text as input.

Turning a user-input prompt into generated code may involves parsing the input to understand the intent, identifying key programming elements (like functions or operations), and selecting language constructs. Predefined code templates can then be filled in based on the prompt, mapping natural language to specific code components. The result is an output of executable code tailored to the developer's request.

### Developer assist - context-aware tooltips

The present invention may be configured to educate developers with respect to next steps that may be taken following execution of any given command in the form of "tips" or "tooltips". Examples are provided in the appended claims.

### Miscellaneous

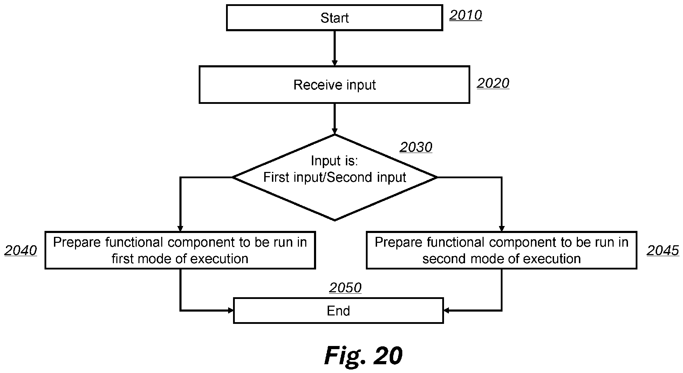

Referring now to Fig. 20, there is shown a flow diagram depicting the functionality of a computing device, in accordance with an embodiment of the present invention. The computing device is configured to perform a method which is initiated at step 2010.

In step 2020, the computing device receives an input. The input comprises a command line input or an interaction by a user with one or more GUI controls.

In step 2030, the computing device determines whether the input is a first input or a second input. The computing device can be configured in such a way as to be capable of handling both inputs (not necessarily at the same time), i.e., so that if the input is the first input then a first course of action will be carried out by the computing device and if the input is the second input then a second course action will be carried out by the computing device. In some implementations, there may also be a third input, in which case step 2030 involves the computing device determining whether the input is a first, second or third input.

In one possible subsequent step 2040 (when the input has been determined to be the first input), the computing device prepares the functional component to be run in a first mode of execution. This mode of execution may comprise remote cloud-based execution as part of a packaged Snowflake native app. Step 2040 may involve packaging the functional component for inclusion into the cloud data platform native app. Step 2040 may also involve generating a listing the cloud data platform (for example at central repository 530 discussed with respect to Fig. 5) to make the packaged cloud data platform native app available to a consumer cloud data platform account. Additionally or alternatively, step 2040 may involve deploying the cloud data platform native app as a single application running in a consumer cloud data platform account (for example, as per application 500 in Fig. 5). Step 2040 may further involve subscribing said consumer cloud data platform account to the deployed cloud data platform native app prior to said deployment. This is done so that the consumer account can receive pushes of any version updates of the native app.

In another possible subsequent step 2045 (when the input has been determined to be the second input), the computing device prepares the functional component to be run in a second mode of execution. This mode of execution may comprise either local execution on the computing device, or remote cloud-based execution as a standalone Snowflake functional component. When the mode of execution is local, step 2045 may include configuring the functional component locally on the computing device, and optionally building the functional component locally on the computing device. When the mode of execution is remote cloud-based execution as a standalone Snowflake functional component. Step 2045 may include packaging the functional component for deployment to a cloud data platform as a standalone functional component, and optionally deploying the packaged functional component to the cloud data platform as a standalone functional component.

For implementations having three possible inputs, there may be a further possible subsequent step (not shown), when the input has been determined to be the third input. In such implementations, the second mode comprises local execution on the computing device, and the computing device is configured to prepare, if the input is the third input, the functional component to be run in a third mode of execution, said third mode comprising remote cloud-based execution as a standalone cloud data platform functional component.

The method carried out by the device ends at step 2050. However, a further optional step of running the functional component may be performed before step 2050. In particular, after step 2040, the method may include running the functional component in the first mode of execution, and optionally remotely testing the deployed cloud data platform native app. After step 2045, the method may include running the functional component in the second mode of execution by running it locally on the computing device, and optionally locally testing the functional component on the computing device. Alternatively, after step 2045, the method may further include running the functional component in the second mode of execution by running it remotely as a standalone cloud data platform functional component, and optionally remotely testing the standalone cloud data platform functional component. When testing, a set of test definition are used. The set of test definitions that are used is the same regardless of which mode of execution is used. Remotely testing the deployed cloud data platform native app, locally testing the functional component on the computing device, and remotely testing the functional component as a standalone cloud data platform functional component may involve running one or more shell scripts and/or executing one or more automated testing subroutines.

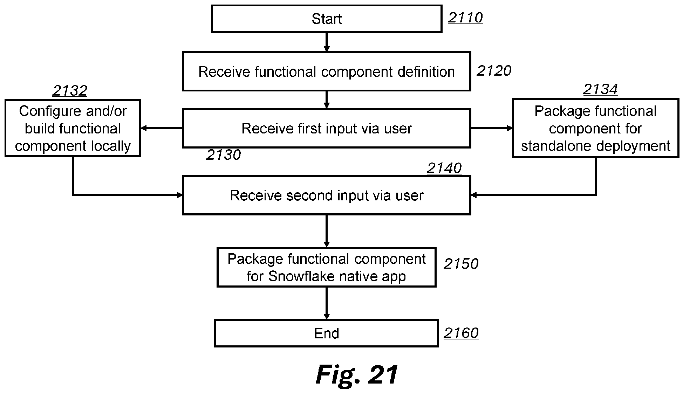

Referring now to Fig. 21, there is depicted a computer-implemented method for creating a Snowflake native app application package. The method is initiated at step 2110.

In step 2120, a functional component definition is received.

In step 2130, a first input is received via a user. In response to the first input, the method either proceeds to step 2132 or step 2134. In step 2132, the functional component is configured and/or built locally. Step 2132 may also involve running the functional component locally, and then potentially testing the functional component locally. In step 2134, the functional component is packaged for deployment to a cloud data platform as a standalone functional component. Step 2134 may also involve deploying the packaged functional component to Snowflake, as well as remotely running the deployed functional component and testing the deployed functional component.

Next, at step 2140, a second input is received via a user. This is typically the same user as the first input was received from. In response to the second input, at step 2150, the functional component is packaged as a Snowflake native app. In some implementations, all of the functional components of the native app are packaged as an application package for a Snowflake native app. The application package may then be deployed, run and/or tested in Snowflake. The method then ends at step 2160.

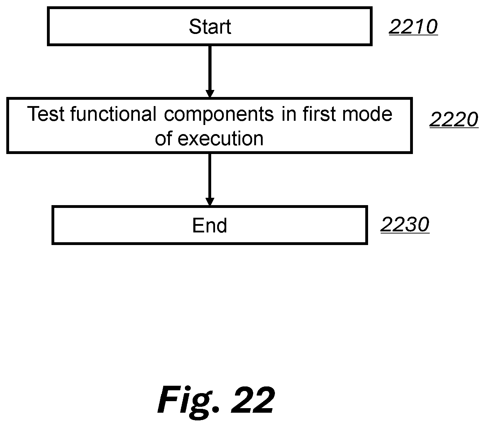

Referring now to Fig. 22, there is depicted a computer-implemented method for testing one or more of a plurality of functional components for a Snowflake native app. The method is initiated at step 2210.

In a step 2220, the one or more functional components are tested in a first mode of execution according to one of more test definitions. The first mode of execution may comprise testing the one or more functional components without packaging and deploying the plurality of functional components as a Snowflake native app. Rather, the first mode of execution of step 2220 involves either executing a test process for the one or more functional components in a local environment using the one or more test definitions, or executing a test process for the one or more functional components as standalone components in Snowflake. When the first mode of execution involves the local environment, a second mode of execution may also be used for testing. In such cases, step 2220 may further include testing the one or more functional components in a second mode of execution according to the one or more test definitions, the second mode of execution comprises executing a test process for the one or more functional components as standalone components in a cloud data platform environment.

The method ends at step 2230. However, an optional step may be performed beforehand. In particular, the method may further comprise testing the one or more functional components in a third mode of execution according to the one or more test definitions, wherein the third mode of execution comprises executing a test process for a packaged and deployed instance of the cloud data platform native app comprising said plurality of functional components in a cloud data platform environment. In certain embodiments, the step of testing the functional components in the third mode of execution comprises determining that every functional component of the plurality of functional components passes testing in the first mode of execution according to the respective one or more test definitions. A determination that every functional component of the plurality of functional components passes testing in the first mode of execution triggers the step of testing the functional components in the third mode of execution and/or a step of packaging and/or deploying the cloud data platform native app.

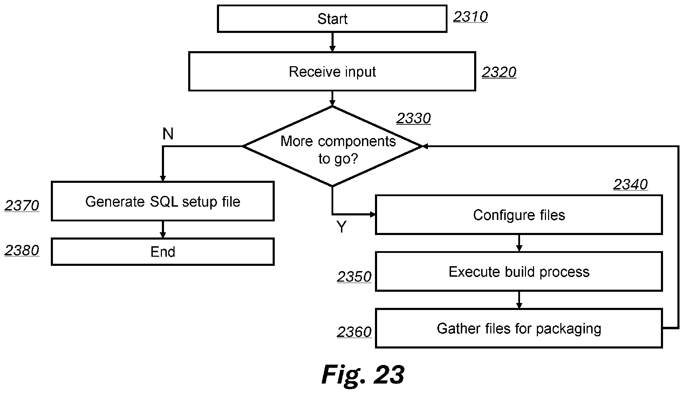

Referring now to Fig. 23, there is depicted a computer-implemented method for creating a Snowflake native app application package defined based on a plurality of functional components. The method is initiated at step 2310.

In step 2320, the method involves receiving an input identifying i) a command, and ii) the plurality of functional components. The input is received as either a command-line terminal input, or as an interaction with a graphical user interface.

In step 2330, the method determines whether there are any functional components remaining to be prepared for packaging as a native app. Put another way, step 2330 involves determining that every functional component has passed a respective one of a plurality of tests. If there are outstanding functional components, the method proceeds to steps 2340 to 2360, which are performed for a particular functional component. Steps 2330 to 2360 are iterated for each of the functional components. If there are no outstanding functional components (e.g. because all have been prepared to be packaged), the method proceeds to step 2370.

The process for each functional component is as follows. In step 2340, one or more files of the functional component are configured. Then, in step 2350, a build process is executed for the functional component. This may involve compiling one or more source code files and/or building one or more containers. Afterwards, in step 2360, the one or more files are gathered for packaging into a native app application package.

In a step 2370, an SQL setup file is generated for the native app application package using one or more SQL setup files for the plurality of functional components. Version information for the native app application package may be updated and stored may occur around this time.

The method ends at step 2380. However, further steps may be undertaken beforehand. These include updating the cloud data platform native app application package to the latest version using a first cloud data platform account (which also executed the other steps of Fig. 23); sharing, by the first account, the cloud data platform native app application package with the second account; installing the cloud data platform native app application package into the second account as a cloud data platform application; and executing, using the second account, remote testing of the installed cloud data platform native app.

Optionally, operational status may be requested by the user any time during the method of Fig. 23. In which case, the method may further comprise determining an operational status in response to a user input or command; generating a developer recommendation based on the determined operational status; and displaying the generated developer recommendation in a graphical user interface. Then, either, the operational status comprises a successful completion of a configure operation, build operation, deploy operation, package operation, or test operation, and the developer recommendation comprises a recommendation of a next user input or command based on an inferred development step; or the operational status comprises an error raised by a failed operation and the developer recommendation comprises a recommendation for correcting the error. In some implementations, the developer recommendation may be generated using a large language model based on one or more console inputs and/or one or more files for the cloud data platform native app. A large language model may be used additionally or alternatively to automatically generate, for the cloud data platform native app application package and/or at least one functional component thereof, based on a user input, one or more of: a source code object or file; a configuration object or file; a manifest object or file and/or a version control object or file; and a script, optionally including an installation script.

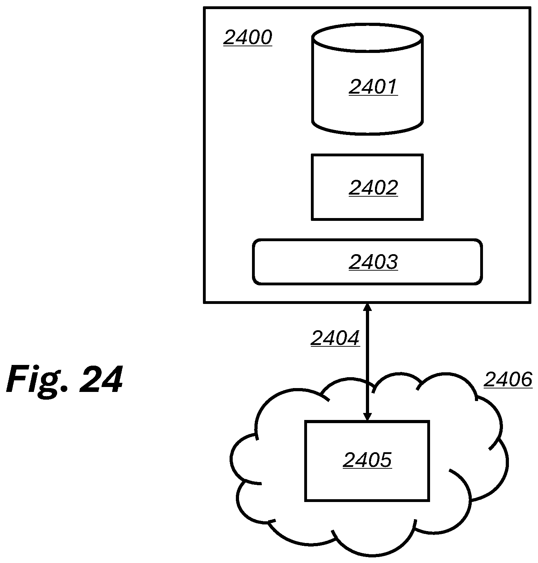

Referring now to Fig. 24, components of a computing device 2400 suitable for use in implementing any one or more of the methods described herein either in part or in their entirety. Computing device 2400 as depicted includes a memory 2401, processor 2402, and communication interface 2403. The processor 2402 is configured to obtain computer executable code from the memory 2401 and execute the computer executable code to perform the processes described herein. Any computing device as described herein may likewise also be configured with the same type of components in the same fashion as depicted in Fig. 24.

In some embodiments, computing device 2400 may additionally be configured with output components for user interaction, such as console outputs, menu-based systems, graphical user interfaces, displays, CRT or LCD screens, monitors, and the like. In some embodiments, computing device 2400 may additionally be configured with input components for user interaction, such as mice, keyboards, trackballs, joysticks, touchscreens, and the like.

Of course, it will be recognised that such user-facing features are by no means necessary for computing device 2400 to possess in order to realise the benefits associated with the present invention, and that the benefits of the present invention may be realised even with computing device 2400 lacking some or all of the aforementioned user-facing input and/or output components. Indeed, in embodiments having a high degree of automation, no user-facing components (or only minimal user-facing components) may be needed.

Any data described as being stored in one or more of the computing devices disclosed herein may be stored in hardware which is accessible by processor 2402, such as in memory 2401. The data may be held in ROM or RAM, or held in and retrieved from a solid state or hard disk drive, or stored externally and retrieved via a network such as network 2404 using communication interface 2403. Other technical means of storing data and retrieving it for use by processor 2402 will be evident to those of ordinary skill in the art.

The computing device 2400 is communicatively coupled to a cloud data platform 2405 (e.g. Snowflake) via the network 2404. The cloud data platform 2405 is as previously described with respect to Fig. 1. The cloud infrastructure for cloud data platform 2405 is provided by a cloud service provider (CSP) 2406, such as Amazon Web Services (AWS), Microsoft Azure, or Google Cloud Platform. Complete description of the cloud infrastructure is beyond the scope of this description and does not materially impact the invention.

It will be appreciated that the transmission of data among components of computing device 2400 and/or cloud data platform 2405 (i.e. Snowflake) described herein may occur in a variety of specific ways, many of which are essentially functionally equivalent for the purposes of the present invention. For example, data may be transferred from one computing device 2400 to the cloud data platform 2405 over a network such as network 2404 via "push"-style proactive sending steps by the transferring device 2400, or via "pull"-style steps carried out on the processor of the receiving platform 2405, such as repeated polling of the transferring device 2400 to determine whether new data is available and ready to be transferred. Networking may be implemented using a layered model such as the TCP/IP model in accordance with any suitable set of selected application, transport, internet and data link layer protocols as will be known to those skilled in the art.

The term "comprising" encompasses "including" as well as "consisting" e.g. a composition "comprising" X may consist exclusively of X or may include something additional e.g. X + Y.

Unless otherwise indicated each embodiment as described herein may be combined with another embodiment as described herein.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, hard-drives, thumb drives, memory cards, etc. and do not include propagated signals. The software can be suitable for execution on a parallel processor or a serial processor such that the method steps may be carried out in any suitable order, or simultaneously. This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP (Digital Signal Processor), programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

The steps of the methods described herein may be carried out in any suitable order, or simultaneously where appropriate. Additionally, individual steps may be deleted from any of the methods without departing from the scope of the subject matter described herein. Aspects of any of the examples described above may be combined with aspects of any of the other examples described to form further examples without losing the effect sought. Any of the steps or processes described above may be implemented in hardware or software.

It will be understood that the above descriptions of preferred embodiments are given by way of example only and that various modifications are possible within the scope of the appended claims and may be made by those skilled in the art. Although various embodiments have been described above with a certain degree of particularity, or with reference to one or more individual embodiments, those skilled in the art could make numerous alterations to the disclosed embodiments without departing from the scope of this invention.

"Snowflake", "Snowpark" and the Snowflake logo are registered trademarks of Snowflake, Inc. Other names used herein may be trademarks of their respective owners. Snowflake publicly announced the launch of native apps on 14th June 2022 at the Snowflake Summit 2022. Snowflake's Native Application Framework preview became available for native app developers during the Snowflake Summit 2023 on 26-29th June 2023, when Snowflake version 7.21 was live. At that time, more than 25 Snowflake native apps were available. Therefore, native apps are supported from Snowflake version 7.21, if not earlier. The current version of Snowflake, at the time of first filing, is version 8.34, released 11th September 2024. It is expected that future versions of Snowflake will continue to support native apps.
The following list of numbered Examples, which may or may not be claimed, forms part of the present disclosure:
1. A computing device configured to receive an input and determine whether the input is a first input or a second input, wherein, for a given functional component of a cloud data platform native app:
   the computing device is configured to prepare, if the input is the first input, the functional component to be run in a first mode of execution, said first mode comprising remote cloud-based execution as part of a packaged cloud data platform native app; and
   the computing device is configured to prepare, if the input is the second input, the functional component to be run in a second mode of execution;
   wherein said second mode comprises either:
      local execution on the computing device; or
      remote cloud-based execution as a standalone cloud data platform functional component.
2. The computing device of Example 1, wherein preparing the functional component to be run in the first mode of execution comprises packaging the functional component for inclusion into the cloud data platform native app, and optionally comprises generating a listing on the cloud data platform to make the packaged cloud data platform native app available to a consumer cloud data platform account.
3. The computing device of Example 1 or Example 2, wherein preparing the functional component to be run in the first mode of execution comprises deploying the cloud data platform native app as a single application running in a consumer cloud data platform account, and optionally comprises subscribing said consumer cloud data platform account to the deployed cloud data platform native app prior to said deployment.
4. The computing device of any one of Examples 1 to 3, further comprising running the functional component in the first mode of execution, and optionally further comprising remotely testing the deployed cloud data platform native app.
5. The computing device of Example 1, wherein preparing the functional component to be run in the second mode of execution comprises configuring the functional component locally on the computing device, and optionally comprises building the functional component locally on the computing device.
6. The computing device of Example 1 or Example 5, further comprising running the functional component in the second mode of execution by running it locally on the computing device, and optionally further comprising locally testing the functional component on the computing device.
7. The computing device of Example 1, wherein preparing the functional component to be run in the second mode of execution comprises packaging the functional component for deployment to a cloud data platform as a standalone functional component, and optionally comprises deploying the packaged functional component to the cloud data platform as a standalone functional component.
8. The computing device of Example 1 or Example 7, further comprising running the functional component in the second mode of execution by running it remotely as a standalone cloud data platform functional component, and optionally further comprising remotely testing the standalone cloud data platform functional component.
9. The computing device of Example 1, wherein the computing device is configured to determine whether the input is the first input, the second input, or a third input,
   wherein the second mode comprises local execution on the computing device, and
   wherein the computing device is configured to prepare, if the input is the third input, the functional component to be run in a third mode of execution, said third mode comprising remote cloud-based execution as a standalone cloud data platform functional component.
10. The computing device of any preceding Example, wherein the input comprises a command line input or an interaction by a user with one or more GUI controls.
11. The computing device of Example 1, wherein the computing device is configured to remotely test the cloud data platform native app using a set of test definitions if the input is the first input, and is either:
   configured to locally test the functional component on the computing device using the set of test definitions if the input is the second input, or
   configured to remotely test the functional component as a standalone cloud data platform functional component using the set of test definitions if the input is the second input.
12. The computing device of Example 11, wherein each of remotely testing the deployed cloud data platform native app, locally testing the functional component on the computing device, and remotely testing the functional component as a standalone cloud data platform functional component comprises running one or more shell scripts and/or executing one or more automated testing subroutines.
13. A computer-implemented method for creating a cloud data platform native app application package, the method comprising:
   receiving a functional component definition;
   in response to a first input received via a user, either:
      configuring and/or building the functional component locally; or
      packaging the functional component for deployment to a cloud data platform as a standalone functional component; and
   in response to a second input received via a user, packaging the functional component for inclusion into a cloud data platform native app.
14. The method of Example 13, comprising configuring and/or building the functional component locally in response to the first input, and further comprising running the functional component locally in response to the first input.
15. The method of Example 14, further comprising testing the functional component locally in response to the first input.
16. The method of Example 13, comprising packaging the functional component to the cloud data platform as a standalone functional component in response to the first input, and further comprising deploying the packaged functional component to the cloud data platform.
17. The method of Example 16, further comprising remotely running the deployed functional component in response to the first input
18. The method of Example 17, further comprising remotely testing the deployed functional component in response to the first input.
19. The method of any one of Examples 13 to 18, further comprising packaging all of the functional components of the cloud data platform native app as a cloud data platform native app application package in response to the second input.
20. The method of Example 19, further comprising deploying the cloud data platform native app application package in response to the second input.
21. The method of Example 20, further comprising running the cloud data platform native app in response to the second input.
22. The method of Example 21, further comprising remotely testing the cloud data platform native app in response to the second input.
23. The method of Example 13, comprising configuring and/or building the functional component locally in response to the first input, and further comprising:
   in response to a third input received via a user, packaging the functional component for deployment to a cloud data platform as a standalone functional component.
24. The method of any one of Examples 13 to 23, wherein the first and second inputs are received via the same user.
25. A computer-implemented method for testing one or more of a plurality of functional components for a cloud data platform native app, the method comprising:
   testing the one or more functional components in a first mode of execution according to one or more test definitions;
   wherein the first mode of execution comprises testing the one or more functional components without packaging and deploying the plurality of functional components as a cloud data platform native app.
26. The method of Example 25, wherein the first mode of execution comprises executing a test process for the one or more functional components in a local environment using the one or more test definitions.
27. The method of Example 26, further comprising testing the one or more functional components in a second mode of execution according to the one or more test definitions wherein the second mode of execution comprises executing a test process for the one or more functional components as standalone components in a cloud data platform environment.
28. The method of Example 25, wherein the first mode of execution comprises executing a test process for the one or more functional components as standalone components in a cloud data platform environment.
29. The method of any one of Examples 25 to 28, further comprising testing the one or more functional components in a third mode of execution according to the one or more test definitions;
   wherein the third mode of execution comprises executing a test process for a packaged and deployed instance of the cloud data platform native app comprising said plurality of functional components in a cloud data platform environment.
30. The method of Example 29, comprising testing each of the plurality of functional components in the first mode of execution, wherein the step of testing the functional components in the third mode of execution comprises determining that every functional component of the plurality of functional components passes testing in the first mode of execution according to the respective one or more test definitions.
31. The method of Example 30 wherein a determination that every functional component of the plurality of functional components passes testing in the first mode of execution triggers the step of testing the functional components in the third mode of execution and/or a step of packaging and/or deploying the cloud data platform native app.
32. A computer-implemented method for creating a cloud data platform native app application package defined based on a plurality of functional components, the method comprising:
   receiving an input identifying i) a command, and ii) the plurality of functional components;
   iteratively, for each functional component of the plurality of functional components:
      configuring one or more files of the functional component,
      executing a build process for the functional component, and
      gathering one or more files for packaging in the cloud data platform native app application package; and
   generating an SQL setup file for the cloud data platform native app application package using one or more SQL setup files of the plurality of functional components.
33. The method of Example 32, further comprising
   updating and storing version information for the cloud data platform native app application package.
34. The method of Example 32 or 33, wherein the build process for at least one functional component of the plurality of functional components comprises compiling one or more source code files.
35. The method of any one of Examples 32 to 34, wherein the build process for at least one functional component of the plurality of functional components comprises building one or more containers.
36. The method of any one of Examples 32 to 35, wherein the input is received as either a command-line terminal input, or as an interaction with a graphical user interface.
37. The method of any one of Examples 32 to 36, wherein said steps are executed using a first cloud data platform account, and the method further comprises automatically executing, cloud data platform in response to the user input, the steps of:
   updating the cloud data platform native app application package to the latest version using the first account;
   sharing, by the first account, the cloud data platform native app application package with the second account;
   installing the cloud data platform native app application package into the second account as a cloud data platform application;
   executing, using the second account, remote testing of the installed cloud data platform native app.
38. The method of any one of Examples 32 to 37, further comprising using a large language model to automatically generate, for the cloud data platform native app application package and/or at least one functional component thereof, based on a user input, one or more of:
   a source code object or file;
   a configuration object or file;
   a manifest object or file and/or a version control object or file; and
   a script, optionally including an installation script.
39. The method of any one of Examples 32 to 38, wherein the method comprises determining, after receiving the user input but before automatically executing the steps, that every functional component has passed a respective one of a plurality of tests.
40. The method of any one of Examples 32 to 39, wherein the method comprises, in response to the user input, automatically executing a packaging process for the cloud data platform native app application;
   wherein said packaging process comprises recursively calling a packaging process for each of the plurality of functional components.
41. The method of any one of Examples 13 to 40, further comprising:
   determining an operational status in response to a user input or command;
   generating a developer recommendation based on the determined operational status; and
   displaying the generated developer recommendation in a graphical user interface.
42. The method of Example 41, wherein either:
   the operational status comprises a successful completion of a configure operation, build operation, deploy operation, package operation, or test operation, and the developer recommendation comprises a recommendation of a next user input or command based on an inferred development step; or
   the operational status comprises an error raised by a failed operation and the developer recommendation comprises a recommendation for correcting the error.
43. The method of Example 41 or Example 42, wherein the developer recommendation is generated using a large language model based on one or more console inputs and/or one or more files for the cloud data platform native app.
44. The method of any one of Examples 13 to 43, wherein the cloud data platform is Snowflake.
45. The computing device of any one of Examples 1 to 12, wherein the cloud data platform is Snowflake.
46. A device comprising a processor and a memory, the memory comprising instructions which, when executed by the processor, cause the processor to carry out the method of any one of Examples 13 to 44.
47. A non-transitory computer-readable storage medium comprising instructions which, when executed by a computer, cause it to perform the method of any one of Examples 13 to 44.

## Claims

1. A computing device configured to receive an input and determine whether the input is a first input or a second input, wherein, for a given functional component of a cloud data platform native app:
the computing device is configured to prepare, if the input is the first input, the functional component to be run in a first mode of execution, said first mode comprising remote cloud-based execution as part of a packaged cloud data platform native app; and
the computing device is configured to prepare, if the input is the second input, the functional component to be run in a second mode of execution;
wherein said second mode comprises either:
local execution on the computing device; or
remote cloud-based execution as a standalone cloud data platform functional component.

2. The computing device of claim 1, wherein preparing the functional component to be run in the first mode of execution comprises packaging the functional component for inclusion into the cloud data platform native app, and optionally comprises generating a listing on the cloud data platform to make the packaged cloud data platform native app available to a consumer cloud data platform account.

3. The computing device of claim 1 or claim 2, wherein preparing the functional component to be run in the first mode of execution comprises deploying the cloud data platform native app as a single application running in a consumer cloud data platform account, and optionally comprises subscribing said consumer cloud data platform account to the deployed cloud data platform native app prior to said deployment.

4. The computing device of any one of claims 1 to 3, further comprising running the functional component in the first mode of execution, and optionally further comprising remotely testing the deployed cloud data platform native app.

5. The computing device of claim 1, wherein preparing the functional component to be run in the second mode of execution comprises configuring the functional component locally on the computing device, and optionally comprises building the functional component locally on the computing device.

6. The computing device of claim 1 or claim 5, further comprising running the functional component in the second mode of execution by running it locally on the computing device, and optionally further comprising locally testing the functional component on the computing device.

7. The computing device of claim 1, wherein preparing the functional component to be run in the second mode of execution comprises packaging the functional component for deployment to a cloud data platform as a standalone functional component, and optionally comprises deploying the packaged functional component to the cloud data platform as a standalone functional component.

8. The computing device of claim 1 or claim 7, further comprising running the functional component in the second mode of execution by running it remotely as a standalone cloud data platform functional component, and optionally further comprising remotely testing the standalone cloud data platform functional component.

9. The computing device of claim 1, wherein the computing device is configured to determine whether the input is the first input, the second input, or a third input,
wherein the second mode comprises local execution on the computing device, and
wherein the computing device is configured to prepare, if the input is the third input, the functional component to be run in a third mode of execution, said third mode comprising remote cloud-based execution as a standalone cloud data platform functional component.

10. The computing device of claim 1, wherein the computing device is configured to remotely test the cloud data platform native app using a set of test definitions if the input is the first input, and is either:
configured to locally test the functional component on the computing device using the set of test definitions if the input is the second input, or
configured to remotely test the functional component as a standalone cloud data platform functional component using the set of test definitions if the input is the second input;
optionally wherein each of remotely testing the deployed cloud data platform native app, locally testing the functional component on the computing device, and remotely testing the functional component as a standalone cloud data platform functional component comprises running one or more shell scripts and/or executing one or more automated testing subroutines.

11. A computer-implemented method for creating a cloud data platform native app application package, the method comprising:
receiving a functional component definition;
in response to a first input received via a user, either:
configuring and/or building the functional component locally; or
packaging the functional component for deployment to a cloud data platform as a standalone functional component; and
in response to a second input received via a user, packaging the functional component for inclusion into a cloud data platform native app.

12. A computer-implemented method for testing one or more of a plurality of functional components for a cloud data platform native app, the method comprising:
testing the one or more functional components in a first mode of execution according to one or more test definitions;
wherein the first mode of execution comprises testing the one or more functional components without packaging and deploying the plurality of functional components as a cloud data platform native app.

13. A computer-implemented method for creating a cloud data platform native app application package defined based on a plurality of functional components, the method comprising:
receiving an input identifying i) a command, and ii) the plurality of functional components;
iteratively, for each functional component of the plurality of functional components:
configuring one or more files of the functional component,
executing a build process for the functional component, and
gathering one or more files for packaging in the cloud data platform native app application package; and
generating an SQL setup file for the cloud data platform native app application package using one or more SQL setup files of the plurality of functional components.

14. A device comprising a processor and a memory, the memory comprising instructions which, when executed by the processor, cause the processor to carry out the method of any one of claims 11 to 13.

15. A non-transitory computer-readable storage medium comprising instructions which, when executed by a computer, cause it to perform the method of any one of claims 11 to 13.
